(19) Europäisches Patentamt
European Patent Office
Office européen des brevets

(11) **EP 3 080 655 B1**

(12) **FASCICULE DE BREVET EUROPEEN**

(45) Date de publication et mention de la délivrance du brevet:
**02.06.2021 Bulletin 2021/22**

(21) Numéro de dépôt: **14806688.9**

(22) Date de dépôt: **06.10.2014**

(51) Int Cl.:
**G02B 21/00** *(2006.01)*

(86) Numéro de dépôt international:
**PCT/FR2014/000220**

(87) Numéro de publication internationale:
**WO 2015/055900 (23.04.2015 Gazette 2015/16)**

(54) **PROCÉDÉ ET DISPOSITIF DE MESURE OPTIQUE**

VERFAHREN UND VORRICHTUNG ZUR OPTISCHEN MESSUNG

METHOD AND DEVICE FOR OPTICAL MEASUREMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.10.2013 FR 1302378
16.01.2014 FR 1400092
18.08.2014 FR 1401874**

(43) Date de publication de la demande:
**19.10.2016 Bulletin 2016/42**

(73) Titulaire: **Bioaxial SAS
75010 Paris (FR)**

(72) Inventeurs:
- **SIRAT, Gabriel
  75011 Paris (FR)**
- **MOISAN, Lionel
  75014 Paris (FR)**
- **FALLET, Clément
  93100 Montreuil (FR)**
- **CARON, Julien
  60800 Crépy en Valois (FR)**
- **DUBOIS, Maxime
  31400 Toulouse (FR)**

(56) Documents cités:
**WO-A2-2012/049381**

- **LAU LANA ET AL: "STED super-resolution microscopy intissue and in mammalian cells", REPORTERS, MARKERS, DYES, NANOPARTICLES, AND MOLECULAR PROBES FOR BIOMEDICAL APPLICATIONS III, SPIE, 1000 20TH ST. BELLINGHAM WA 98225-6705 USA, vol. 7910, no. 1, 10 février 2011 (2011-02-10), pages 1-8, XP060007015, DOI: 10.1117/12.881221**
- **C. F. PHELAN ET AL: "Conical diffraction and Bessel beam formation with a high optical quality biaxial crystal", OPTICS EXPRESS, vol. 17, no. 15, 20 juillet 2009 (2009-07-20), page 12891, XP055056299, ISSN: 1094-4087, DOI: 10.1364/OE.17.012891**

**Description**

La présente invention concerne un procédé et un dispositif de mesure optique. Elle trouve des applications dans tous les domaines de l'imagerie, en particulier mais non limitée au domaine de la Microscopie, incluant mais non limité aux domaines de la Biologie, de la Médecine, de la Pharmacie, des Semiconducteurs, de l'Etude des matériaux, de la Métrologie, du contrôle, de la mesure et de l'observation et à l'ensemble des processus d'acquisition de l'information à partir d'observations optiques, dans le domaine macroscopique ou microscopique.

Un Microscope optique est un instrument optique utilisé en général pour voir, analyser ou mesurer les objets trop petits pour être visualisés par l'œil nu.

Nous utiliserons le terme biologique pour décrire toute entité de la Science du vivant, quelle que soit sa provenance, humaine, animale ou végétale et la finalité de son observation, recherche, diagnostique ou thérapeutique. Ce terme inclut les utilisations médicales de la technique décrite. La Microscopie est utilisée dans le domaine de la Biologie, par exemple, pour observer, étudier et mesurer des entités (objets) biologiques et leur dynamique.

Nous utiliserons, par extension, le terme de *Vision artificielle* pour décrire l'ensemble des applications de mesure, métrologie ou observation d'objets ou éléments produits ou construits ou réalisés par un être humain ou une machine, par exemple, pour observer, étudier et mesurer des Semiconducteurs ou pour caractériser les matériaux.

Les définitions usuelles sont utilisées pour: limite de diffraction optique, critère de Rayleigh, disque d'Airy et ses rayon et diamètre. Nous utilisons dans le contexte de l'invention les termes de superrésolution, superrésolu, d'imagerie de superrésolution et de microscopie de superrésolution pour décrire l'acquisition de données optiques, en imagerie, en microscopie ou en Vision artificielle, à une résolution supérieure à la limite de diffraction optique. Les définitions usuelles sont utilisées pour la fluorescence et pour les fluorophores.

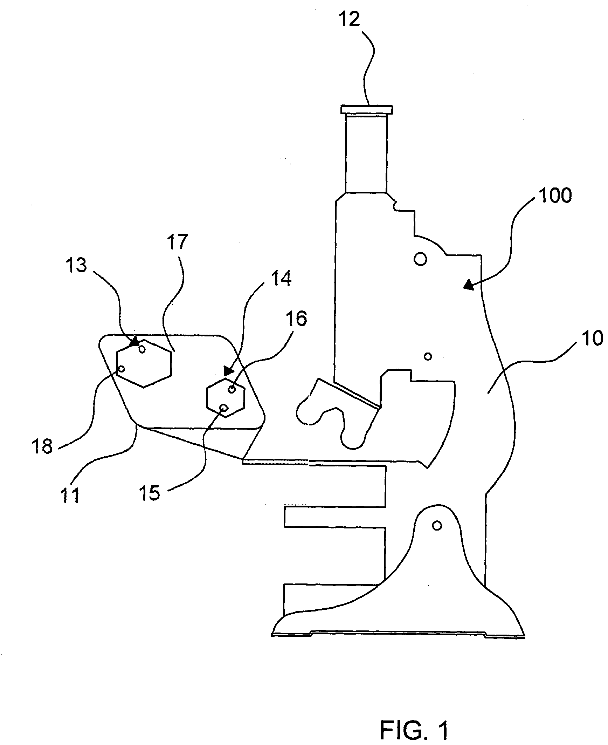

On se réfère maintenant à la Figure. 1, qui représente une illustration du paradigme de la Microscopie, 100.

La Microscopie optique consiste en l'illumination, par une source lumineuse, non représentée, à l'aide d'un Microscope, 10, d'un échantillon biologique ou non-biologique,11, et la mesure en fonction du temps, à l'aide d'une observation visuelle ou d'un module de détection, 12, de la lumière émise, réémise, diffusée ou réfléchie ou transmise par l'échantillon. En Biologie, l'échantillon consiste en une - ou une pluralité - d'entités objets biologiques différentes, 13 et 14, positionnées à différentes positions. Des exemples de tels objets, sont, entre autres, une cellule, un virus, une protéine et un fragment d'ADN. En vision industrielle artificielle l'échantillon peut être, par exemple, un élément semi-conducteur

La Microscopie est segmentée en différentes modalités ayant des caractéristiques et des finalités différentes. De nombreuses descriptions des différentes modalités, de leurs caractéristiques et de leurs avantages existent extensivement dans la littérature et se trouvent par exemple sur le web des sociétés Zeiss, Leica, Nikon, ou Olympus.

On peut structurer les applications de Microscopie de nombreuses manières différentes: l'une d'entre elles est de distinguer les modalités de Microscopie dévolues à visualiser des minuscules sources ponctuelles de celles dévolues à mesurer des objets continus.

Le cas des minuscules sources ponctuelles est a priori beaucoup plus simple. L'objet consiste en un petit nombre de points lumineux ; ceux-ci peuvent être décrits par un petit nombre de paramètres - les descripteurs définis par la suite - simplifiant de beaucoup le problème physique et la complexité algorithmique. Le cas d'un objet continu, décrit par une distribution spatiale - ou spatio-temporelle, si on prend en compte la dynamique continue, est différent et est décrit aussi dans cette demande de brevet.

La microscopie de fluorescence est une des modalités de la microscopie; elle a remplacé, dans de nombreuses applications, les autres techniques de microscopie. Un microscope à fluorescence est un microscope optique utilisé pour étudier les propriétés d'objets, ou de substances organiques ou inorganiques en utilisant les phénomènes de fluorescence au lieu de, ou en plus d'autres modalités telle que la réflexion et l'absorption.

On se réfère de nouveau à la Figure. 1, décrivant, cette fois, un microscope de fluorescence utilisé soit en Biologie soit en Vision artificielle pour caractériser, par exemple, des matériaux; en microscopie de fluorescence on fixe des minuscules sources ponctuelles, 15 à 18, par exemple des fluorophores basées sur le phénomène physique de la fluorescence à un photon, à des positions spécifiques et prédéterminées des objets, 13 et 14; on observe la lumière émise par les sources ponctuelles en lieu et place d'observer la lumière émise par les objets, 13 et 14, eux-mêmes.

L'échantillon est éclairé par une lumière de longueur d'onde, ou de longueurs d'onde spécifiques, qui est absorbée par les sources ponctuelles, induisant ainsi l'émission de lumière à des longueurs d'onde différentes et plus élevées. Lors de la collection de la lumière émise, en fluorescence, la lumière d'illumination est séparée de la fluorescence émise, qui est plus faible, par l'utilisation d'un filtre spectral d'émission.

La microscopie de fluorescence étudie la lumière émise par de petites sources ponctuelles, les fluorophores. Toutefois, lorsque la densité des fluorophores est élevée, les fluorophores ne sont plus analysés individuellement mais traités comme un objet continu. Il est important de noter, dès ce stade, que le même système permet l'observation d'objets continus, et n'est pas limité à l'observation de sources ponctuelles.

Les fluorophores sont devenus un outil important de la visualisation d'objets biologiques. L'activité et l'information biologique comprenant des détails au-dessus de la limite de résolution de 200 nm sont systématiquement visualisés et mesurées en utilisant la microscopie de fluorescence. Cette limite de résolution est dérivée du critère de Rayleigh, qui, dans le meilleur des cas, atteint 200nm dans des systèmes conçus spécialement. Pendant longtemps, jusqu'à l'émergence des techniques de superrésolution décrites ci-dessous, il était reconnu que les techniques optiques, y compris la microscopie de fluorescence, sont incapables de visualiser des détails plus petits que le critère de Rayleigh, de l'ordre de 200 nm.

Cependant, d'autres activités biologiques fondamentales se produisent également à des échelles de taille inférieure à 200 nm dans des échantillons biologiques. A ce niveau de résolution spatiale, des phénomènes importants peuvent être observés : les processus biologiques à l'échelle intracellulaire, le transfert d'information cellulaire, le repliement et le dépliement des protéines et les modifications de l'ADN et l'ARN. Ainsi, par exemple, la mesure de ces informations intracellulaires ouvrira de nouvelles voies à la compréhension de l'activité biologique, et conduira à des progrès dans la connaissance et le suivi de la recherche et du diagnostic médical.

Les principales implémentations de la microscopie de fluorescence, décrites en détails dans la littérature, sont le microscope confocal, souvent utilisé dans une configuration à balayage ou à disque rotatif et le microscope d'imagerie à grand champ.

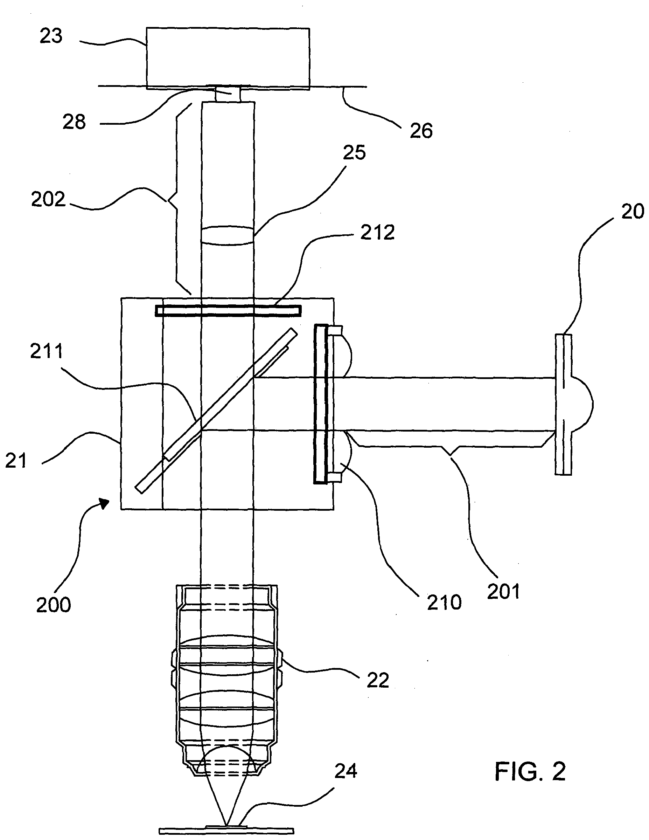

On se réfère maintenant à la figure 2, qui est une représentation simplifiée d'un microscope confocal à fluorescence de l'art antérieur 200.

Un microscope confocal de fluorescence, Fig. 2, est un instrument optique. Ses principaux composants matériels sont représentés dans la figure. 2. Ils comprennent:

Une source de lumière, 20,

un cadre optomécanique non représenté,

un cube de filtres, 21,

un objectif de microscope 22, et,

un ensemble détecteur, 23,

une unité de traitement, non représentée.

La source de lumière, 20, qui peut être une lampe à arc ou d'un laser, crée de l'énergie lumineuse nécessaire pour la fluorescence.

Le cadre optomécanique, non représenté, est le support de tous les éléments optiques et comprend des optiques auxiliaires et les capacités d'alignement. Il comprend également, des éléments optiques, non représentés, capables de façonner le faisceau, pour permettre sa focalisation d'un point de taille minimale, au moyen de l'objectif du microscope.

Il peut comprendre également, dans un microscope confocal de fluorescence à balayage, un mécanisme de balayage, spatial ou angulaire, non représenté pour modifier la position de la source ponctuelle par rapport à l'objet à mesurer.

Le mécanisme de balayage peut alternativement:

translater mécaniquement l'objet, en utilisant par exemple une platine de translation,

scanner optiquement le faisceau sur l'objet, en utilisant par exemple un ensemble de miroirs galvanométriques ou translateurs acousto-optiques, ou

utiliser une combinaison quelconque de ces moyens de translation, mécaniques ou optiques.

Dans un microscope confocal de fluorescence à balayage, l'information est recueillie point à point, en utilisant le mécanisme de balayage.

Il peut comprendre également, dans un microscope confocal de fluorescence à disque rotatif, un disque rotatif, comportant une pluralité de trous microscopiques, permettant la projection simultanée d'une pluralité de points. Dans un microscope confocal de fluorescence à disque rotatif, un ensemble de points, correspondant aux trous microscopiques est acquis à chaque instant et la rotation du disque permet de balayer l'ensemble de la surface de l'échantillon pour une position longitudinale donnée.

Le cube de filtres, 21, canalise les différents signaux optiques et évite la contamination du signal de fluorescence parla lumière d'excitation. Le cube de filtres se décompose en: filtre d'excitation, 210, miroir dichroïque, 211, et filtre d'émission, 212. Les filtres et le miroir dichroïque sont choisis en fonction de la longueur d'onde d'excitation et des caractéristiques spectrales d'émission du fluorophore.

L'objectif de microscope, 22, focalise la lumière créée par la source dans le plan focal de l'objectif, 24, en une distribution lumineuse de taille réduite, la distribution lumineuse optimale consistant en un disque d'Airy. L'objectif de microscope, 22, permet également de recueillir en retour la lumière fluorescente émise par les fluorophores.

Pour un microscope confocal de fluorescence à balayage le système peut être déscanné, c'est-à-dire que la lumière en retour peut passer par le mécanisme de balayage pour compenser la translation due au balayage.

Une lentille de détecteur, 25, crée, au plan image du détecteur 26, une image magnifiée du plan focal de l'objectif, 24.

Un trou confocal, 27, est théoriquement placé dans le plan image du détecteur, 26. Dans la plupart des systèmes pratiques, le trou confocal, 27, est placé dans un plan d'imagerie intermédiaire non représenté et réimagé sur le plan image du détecteur, 26.

L'assemblage du détecteur, 23, détecte l'intensité fluorescente globale dans le volume éclairé, et la transforme en signal numérique. Pour un microscope confocal à balayage, l'assemblage du détecteur est constitué d'un détecteur d'un seul élément, comme un PMT ou SPAD. Pour un microscope confocal à disque rotatif, l'assemblage du détecteur est constitué d'une matrice d'éléments de détection, telle qu'un CCD, un EMCCD, un CMOS ou une matrice de SPAD.

L'ensemble des composants montés à partir de la source lumineuse jusqu'au filtre dichroïque est la voie d'éclairage, 201. L'ensemble des composants montés à partir du filtre dichroïque jusqu'à l'assemblage du détecteur est la voie de détection, 202.

Le processus optique élémentaire d'un microscope confocal peut être segmenté en six étapes:

- Projection de la lumière sur le volume d'analyse

- émission de lumière fluorescente par les fluorophores

- Imagerie des fluorophores sur le plan focal

- Limitation dans le plan focal de la lumière analysée par le trou confocal

- Intégration de la lumière analysée par un détecteur photoélectrique

- Visualisation de l'intensité mesurée sous forme d'une valeur de pixel dans une image

Des microscopes à fluorescence sont disponibles auprès de plusieurs fabricants, comme par exemple, Nikon, Zeiss, Leica ou Olympus. Les microscopes à fluorescence peuvent être soit des microscopes standards adaptés à la fluorescence soit des microscopes spécifiques optimisés pour la fluorescence. Les microscopes modernes sont des instruments polyvalents capables de fonctionner dans de nombreuses modalités différentes, y compris, mais sans s'y limiter, les modalités de fluorescence, en utilisant la même plateforme optomécanique et la plupart des composants. La plupart des microscopes à fluorescence sont développés en tant que plate-forme ouverte, capable d'effectuer plusieurs fonctionnalités additionnelles avec des modifications minimes. D'autres microscopes à fluorescence sont des instruments dédiés, personnalisés à une tâche spécifique, comme le diagnostic médical ou pharmaceutique.

**Superrésolution**

De nouvelles méthodes optiques, les méthodes de superrésolution, sont capables de discriminer des sources ponctuelles, en dessous du critère de Rayleigh. Ces méthodes sont développées par plusieurs entreprises, laboratoires et chercheurs et certains des instruments utilisant ces méthodes, les microscopes de superrésolution, sont disponibles commercialement. Plusieurs analyses comparatives des méthodes de superrésolution ont été publiées récemment dans la littérature, comme les articles de Schermelleh et al. [1].

Une bibliographie mise à jour sur la superrésolution se trouve sur le site web de la société Zeiss, et sur le site web de la société Nikon.

Les différentes méthodes de microscopie existantes et les microscopes existants, n'incorporant pas la super-résolution, permettent l'observation microscopique dans la limite de la diffraction optique. Ceci réduit leur champ d'utilisation à un ensemble d'applications limité.

Les nouvelles techniques de superrésolution permettent elles d'obtenir des informations au-delà de la limite de résolution. Le principal problème de l'ensemble des techniques existantes de superrésolution est que l'enveloppe des performances, exprimée en termes de résolution latérale, de résolution longitudinale, de vitesse, d'intensité lumineuse nécessaire, de photo-toxicité dans l'objet biologique, d'aptitude à mesurer des objets différents, est très limitée.

De plus, la plupart des méthodes et instruments existants de superrésolution peuvent fournir soit une bonne résolution latérale, soit une bonne résolution longitudinale, mais rarement les deux.

De plus, tous ces instruments sont complexes et nécessitent une haute technicité de l'opérateur.

De plus, ces instruments ne peuvent observer généralement qu'une faible partie des spécimens biologiques, en raison de fortes limitations opérationnelles, telles que pour certains d'entre eux une faible profondeur de champ ou de très fortes intensités nocives pour les cellules.

Un autre problème avec les méthodes et instruments existants de super résolution, est que la plupart d'entre eux sont en mesure de récupérer, dans le volume illuminé, les attributs d'un fluorophore unique, mais ne parviennent pas à reconnaître simultanément la présence de plusieurs fluorophores et de mesurer leurs attributs.

Un problème supplémentaire avec les méthodes et instruments existants de superrésolution est que ces méthodes et instruments existants sont présentés aux utilisateurs et perçus par eux comme un outil général, apte à remplacer les microscopes standard ou confocal. Cependant, les méthodes et instruments existants de superrésolution manquent de la simplicité, de la robustesse, de la facilité d'utilisation et des prix compétitifs des microscopes standards ce qui freine leur utilisation comme outils de recherche générale ou comme outils de diagnostic.

Un autre problème avec les méthodes et instruments existants de superrésolution est que la plupart de ces méthodes et instruments sont construits comme des instruments autonomes conçus pour remplacer les microscopes standards. Une telle approche nécessite le remplacement des instruments existants ainsi que le renouvellement de tous les systèmes périphériques et toutes les connaissances et savoir-faire, liés aux plateformes de microscopie et développées depuis de nombreuses années.

Un autre problème avec la plupart des méthodes et instruments existants de microscopie de fluorescence et de superrésolution est que ces méthodes et instruments sont conçus sur un paradigme d'acquisition d'image, pour lequel l'entité de base de l'information est une - ou plusieurs images, ou une - ou plusieurs - régions ROI - Région Of Interest bi ou tridimensionnelles. Les méthodes algorithmiques, systémiques et de superrésolution décrites ultérieurement dans le contexte de l'invention permettront, par leur inhérente flexibilité, le développement de stratégies nouvelles d'acquisition. Ces procédures d'acquisition, dynamiques et sélectives, seront définies par une gestion optimisée de la séquence d'acquisition et de traitement interactif et différé. Elles permettront une optimisation plus évoluée de l'information utile, définie par des critères basés sur la forme, la géométrie et la dynamique d'un ou plusieurs objets fluorescents, séparément ou l'un par rapport à l'autre.

Il y a donc toujours un besoin urgent de fournir des méthodes et instruments de superrésolution et des méthodes algorithmiques capable de mesurer avec une grande précision les attributs d'un fluorophore. Il est en outre nécessaire de fournir des méthodes et des instruments pour détecter et quantifier la présence de plusieurs fluorophores placés dans le même volume illuminé.

Un autre problème avec la plupart des méthodes et instruments existants de microscopie de fluorescence et de superrésolution est que ces méthodes et instruments sont conçus pour étudier des échantillons sur des lamelles de microscopes. Cependant, le microscope confocal est aujourd'hui utilisé dans de nombreux domaines médicaux comme instrument de diagnostics in-vivo pour des examens internes et externes au corps humain par le biais de fibres optiques utilisées pour illuminer et pour visualiser la fluorescence émise par les tissus à diagnostiquer. La superrésolution ne permet pas actuellement de pratiquer des tels diagnostics in-vivo. Les méthodes algorithmiques, systémiques et de superrésolution décrites ultérieurement dans le contexte de l'invention permettront le développement de nouvelles méthodes de diagnostics in-vivo qui réduiront les besoins de pratiquer des biopsies et raccourciront le temps d'attente du patient La publication "STED super-resolution microscopy in tissue and in mammalian cell" (LAU LANA ET AL) divulgue un procédé optique STED. La publication "Conical diffraction and Bessel beam formation with a high optical quality biaxial crystal" (C. F. PHELAN ET AL) divulgue le principe de la diffraction conique. Le document WO 2012/049381 A2 divulgue une méthode de microscopie de super résolution utilisant la projection de distributions lumineuses de topologies différentes grâce à un cristal conique.

## RESUME DE L'INVENTION :

Un premier aspect de cette invention concerne un procédé optique selon la revendication 1.

Un autre aspect de l'invention concerne la réalisation d'un système de superrésolution de type STED ou RELSOFT à l'aide d'un procédé optique de mesure à chemin optique commun achromatique et capable de beamshaping différent sur différents faisceaux en fonction de leur polarisation selon la revendication 5. Des modes de réalisation additionnels sont définis dans les revendications dépendantes.

BREVE DESCRIPTION DES DESSINS

L'invention va maintenant être décrite en relation avec certains modes de réalisation en référence aux figures illustratives suivantes de sorte qu'elle puisse être mieux comprise.

Avec une référence spécifique aux figures, il est souligné que les indications figurantes sont présentées à titre d'exemple, et à des fins d'illustration de la discussion des modes de réalisation de l'invention et ne sont présentés que dans le but de fournir ce qui puisse être considéré la description la plus utile et facile à comprendre des principes et des aspects conceptuels de l'invention. À cet égard, aucune tentative n'est faite pour montrer des détails de structure de l'invention plus en détail que ce qui est nécessaire pour une compréhension fondamentale de l'invention, la description prise avec les dessins faisant apparaître à l'homme de l'art comment les différentes formes de l'invention peuvent être réalisées dans la pratique.

Dans les dessins:

Fig. 1 est une représentation simplifiée en perspective d'un microscope à fluorescence confocal de l'art antérieur, utilisé aussi comme support de l'invention;

Fig. 2 est une représentation picturale simplifiée microscope confocal de l'art antérieur

Fig. 3 est une illustration schématique simplifiée d'un setup d'un module de diffraction conique, conformément à un mode de réalisation de la présente invention;

Fig. 4 est une représentation picturale simplifiée des deux paradigmes de mesure selon des modes de réalisation de l'invention et de la microscopie confocale;

Fig. 5 est une représentation picturale simplifiée d'un mode de réalisation particulier de la plateforme de microscopie SRCDP ;

Fig. 6a est une illustration schématique simplifiée d'un module latéral de superrésolution, conformément à un mode de réalisation de la présente invention;

Fig. 6b est une illustration schématique simplifiée d'une autre réalisation d'un module latéral de superrésolution, conformément à un mode de réalisation de la présente invention;

Fig. 7 présente des tables de distributions lumineuses d'un module de diffraction conique en fonction de la polarisation des polariseurs d'entrée et de sortie pour plusieurs valeurs du paramètre de diffraction conique, $\rho_0$. Ces distributions lumineuses ont été calculées par simulation des équations développées par Berry, [2] ;

Fig.8 est une illustration schématique simplifiée d'un des modes de réalisation du dark tracking ;

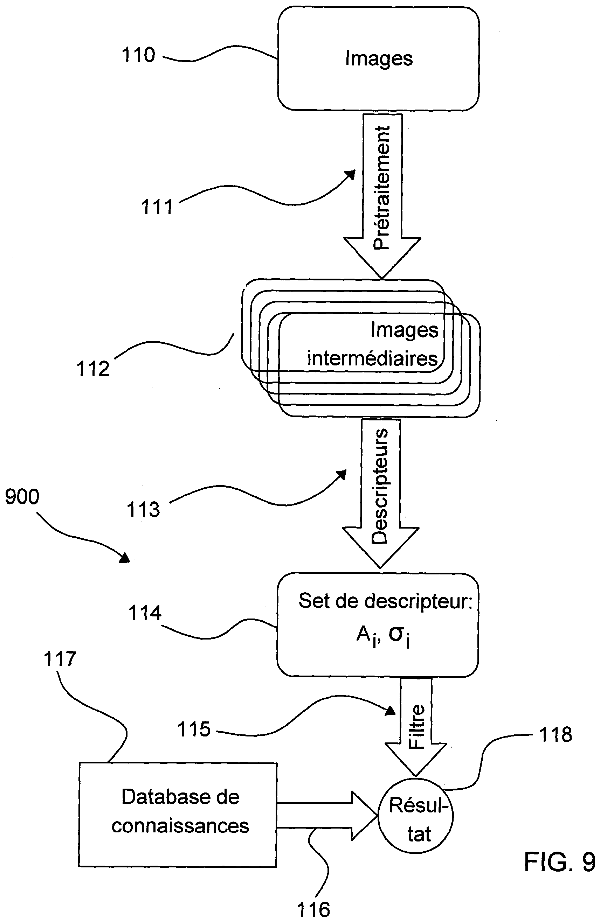

Fig. 9 est une illustration schématique simplifiée d'une méthode d'algorithme de superrésolution de données de fluorophores, conformément à un mode de réalisation de la présente invention.

Fig. 10 est une illustration schématique simplifiée du calcul desdescripteurs ;

Fig. 11 est une illustration schématique simplifiée du module de contrôle de la plateforme SRCDP.

Dans toutes les figures, des chiffres de référence similaires identifient des pièces similaires.

**Définitions et compléments techniques**

Les définitions usuelles sont utilisées dans la description pour: phase et polarisation, polarimétrie, vecteurs et matrices de Jones, paramètres de Stokes et techniques de mesure des paramètres de Joncs et de Stokes.

Les définitions usuelles sont utilisées dans la description pour le mode $TEM_{00}$ d'une fibre et les termes anglais, « Photonic Crystal Fiber » - PCF -,« few modes fiber » - FMF , vortex Fiber et « dual core Photonic Crystal Fiber ».

Nous nous référerons à un dispositif permettant de coupler plusieurs lasers à différentes longueurs d'onde ou à une même longueur d'onde, avec la même polarisation ou avec différentes polarisations, dans une ou plusieurs fibres optiques, en utilisant le terme de banc laser.

La définition des superoscillations est celle de Yakir Aaronov et Sir Michael Berry. Une superoscillation est un phénomène dans lequel un signal qui est globalement limité en bande peut contenir des segments locaux qui oscillent plus rapidement que ses composantes de Fourier les plus rapides. [26]

Le centre ou centroïde d'une distribution de lumière est le centre de gravité de l'intensité. Le diamètre d'une distribution de lumière est le diamètre du premier zéro d'intensité, pour des ondes régulières et singulières, sans prendre en compte le zéro central de l'onde singulière.

Deux distributions de lumière sont collocalisées si leurs centres coïncident ou sont séparés par une valeur spatiale faible par rapport à la dimension de la distribution de lumière.

Dans cette demande de brevet, nous utiliserons la longueur d'onde d'émission, comme métrique de base du système.

Dans cette demande de brevet, les définitions usuelles sont utilisées pour les composants optiques suivants : lentille dont la définition est élargie, pour inclure l'ensemble des moyens optiques qui transmettent, réfractent ou réfléchissent la lumière, optique auxiliaire - sous-module optique visant à interfacer et à ajuster soit les paramètres géométriques soit les paramètres de phase et/ou de polarisation entre deux autres sous-modules ou modules optiques -, polariseur, analyseur, lame de retard, séparateur de faisceau beamsplitter en anglais, polarisant et non-polarisant, combineur de faisceau beam combiner en anglais, polarisant et non-polarisant.

Dans cette demande de brevet, les définitions usuelles sont utilisées pour les polariseurs azimutal et radial. Nous étendrons, implicitement ou explicitement, certains développements décrits ultérieurement pour les polariseurs azimutal et radial, à l'ensemble des éléments polarisants variables dans l'espace.

Dans cette demande de brevet, les définitions usuelles, [3], sont utilisées pour les différentes techniques de superrésolution; ces techniques peuvent être regroupées en familles:

- REversible Saturable OpticaL Fluorescence Transitions(RESOLFT), regroupant les techniques : Stimulated Emission Depletion microscopy (STED), Ground state depletion (GSD), Saturated Structured Illumination Microscopy (SSIM) et SPEM (Saturated Pattern Excitation Microscopy), Localisation Microscopy, (microscopie de localisation, en anglais) regroupant les techniques Photoactivated localization microscopy (PALM), FPALM (3D Localization in Fluorescence Photoactivation Localization Microscopy), Stochastic optical reconstruction microscopy (STORM), dSTORM (direct STORM), SPDM (Spectral Precision Distance Microscopy), « stochastic blinking », Ground state depletion (GSD), et techniques similaires (quel que soit l'acronyme utilisé)

- Structured Image Microscopy (SIM)

- FRAP (fluorescence recovery after photobleaching),

- TIRF (Total Internal Reflection Fluorescence Microscopy).

Dans cette demande de brevet, les définitions usuelles sont utilisées pour différentes techniques de Microscopie, de résolution standard ou de superrésolution, fluorescentes ou non, telles que les termes anglais« Computational Microscopy », « Correlative Microscopy », « Cross-platform-microscopy », FCS - Fluorescence Correlation Spectroscopy », FCCS -« Fluorescence Cross-Correlation Spectroscopy », ou PCH - Photon Counting Histogram, RICS « Raster Imaging Correlation Spectroscopy » ou FRAP - « Fluorescence Recovery after Photobleaching) analysis».

Dans cette demande de brevet, les définitions usuelles sont utilisées pour la Transformée de Hough.

Nous nous référons à un polariseur partiel pour décrire un élément ou un module dont l'absorption est différente pour les deux polarisations linéaires - dichroïsme linéaire - ou pour les deux polarisations circulaires - dichroïsme circulaire.

Nous nous référons à des éléments dynamiques de polarisation ou de phase, pour décrire les moyens optiques dont les propriétés de polarisation ou de phase varient en fonction du temps de façon contrôlée, de façon discrète ou continue.

Ces éléments dynamiques de polarisation ou de phase comprennent, mais ne sont pas limités à: lames d'onde tournante sur leur axe, valves de lumière basées sur des technologies à cristaux liquides, dispositifs électro-optiques, connus aussi comme cellules de Pockels, cellules de Kerr, dispositifs électro-optiques résonnants, dispositifs magnéto-optiques, connus également en tant que cellules de Faraday, dispositifs acousto- ou élasto-optiques ou toute combinaison de ces moyens.

Nous nous référons à des éléments dispersifs de polarisation ou de phase pour décrire des éléments dont l'état de polarisation dépend de la longueur d'onde. Le plus simple des sous-modules dispersifs de polarisation est la lame d'onde multimode ou *épaisse,*

Nous nous referons a l' « algorithme du centroïde » pour décrire la procédure usuelle de mesure du centroïde et éventuellement de la largeur (FWHM - acronyme en anglais pour « Full width Half Maximum ») d'une distribution lumineuse.

Cet algorithme a sa source dans l'Astronomie et l'Astrométrie, et a permis la mesure de la position des étoiles avec une très grande précision. Cet algorithme est utilisé aujourd'hui dans l'ensemble de l'instrumentation optique, y compris en Biologie de superrésolution.

Dans ce document, les définitions usuelles sont utilisées pour les composants optoélectroniques suivants : détecteur photoélectrique, CCD, EMCCD, CMOS, SPAD Single Photon Avalanche Diode et matrice de SPAD.

Nous utiliserons les termes:

◦ image optique, pour la distribution spatiale d'intensité lumineuse,

◦ image électronique, pour décrire la distribution spatiale de charges pour un CCD, de courant pour un CMOS ou d'évènements pour un SPAD, créées par l'image optique, à un instant donné, dans un plan de détection,

◦ image numérique, pour décrire une matrice de nombres créée par la numérisation de l'image électronique.

Pour simplifier la lecture et la compréhension du texte nous utiliserons aussi le terme d'image pour la sortie d'un détecteur à pixel unique tel qu'un PMT ou SPAD, en la considérant comme une image consistant en un unique pixel.

Lorsqu'aucune ambiguïté n'existe, ou que la distinction entre les trois types d'images n'est pas nécessaire, nous utiliserons le terme simplifié générique d'image.

Pour les images, nous utilisons la terminologie utilisée pour les détecteurs matriciels, tels que les CCD, les EMCCD et les CMOS. Pour les SPAD et les matrices de SPAD, le résultat d'une mesure est une liste ordonnée dans le temps, d'impacts de photons détaillant, pour chaque photon, le temps d'impact et la position de l'impact. Pour simplifier la présentation de ce document, nous inclurons ce cas dans notre définition des images.

Les images détaillées dans ce document, dans de nombreux cas, peuvent être qualifiées des microimages, des images de taille sensiblement égale à un petit nombre de diamètres du disque d'Airy, typiquement inférieur à 5 diamètres, et/ou à faible nombre de pixels, typiquement 4*4 à 32*32.

Dans une image numérique Aj, les indices m et n représentent les indices des pixels ; l'origine des pixels sera choisie comme la projection du centre du volume d'analyse défini dans un paragraphe ultérieur.

### Polarimétrie et vecteurs de Stokes

La polarimétrie se réfère à la mesure de l'état de polarisation de la lumière incidente. L'état de polarisation de la lumière incidente peut être décrit par les paramètres de Stokes, un ensemble de valeurs, introduit par George Gabriel Stokes en 1852, et utilisé en Optique.

### Copropagation de deux faisceaux optiques

De nombreux systèmes et dispositifs optiques utilisent deux faisceaux - ou plus - ayant des propriétés différentes. Les faisceaux peuvent interagir entre eux ou non, être projetés séquentiellement ou simultanément. Dans la majorité de ces systèmes et dispositifs, les deux chemins optiques sont séparés physiquement l'un de l'autre. Cette séparation physique créée, au niveau de l'ingénierie du système un ensemble de contraintes, qui bien que résolvables, alourdissent de façon importante la complexité du système et son coût. Nous nous référons à des systèmes à *chemin commun* « common path » en anglais, pour référencer un ensemble de dispositifs dans lesquels les deux faisceaux différenciés se propagent suivant le même chemin physique, à des variations mineures près.

### Champ électrique en coordonnées polaires et modes angulaires

$$\mathbf{E}(\rho,\theta) = A(\rho,\theta) \bullet \exp\left[ i\,\varphi(\rho,\theta) \right] \mathbf{u}(\rho,\theta) \qquad (\text{EQ. 1})$$

Il est usuel en Optique de décomposer les composantes du champ, soit son amplitude, sa phase et sa polarisation, en modes orthogonaux, cartésiens ou polaires.

De nombreuses décompositions en modes orthogonaux polaires, tels que les modes Gaussiens, Hermite-Gaussiens, et Laguerre-Gaussiens sont connus de l'Homme de l'Art.

Nous utiliserons principalement dans ce document, la décomposition de l'amplitude du champ électrique en modes Hypergéométriques-Gaussiens HyGG de forme :

$$A(\rho,\theta) \propto \rho^{p+|m|} \exp\left( -\rho^2 + i\ell\theta \right) \qquad (\text{EQ. 2})$$

Dans cette décomposition, p est le mode radial et $\ell$ l'ordre azimutal.

### Ondes singulières

Une onde singulière comprend une intensité nulle en son centre et une variation de phase azimutale d'un multiple de $2\pi$. Ce thème de recherche en Optique, initié par l'article majeur de J.F Nye et M. Berry, en 1974, [4], est maintenant connu comme l'« optique singulière ». Des exemples d'ondes régulières et singulières sont présentés dans la suite.

Nous utilisons le terme anglais *beam shaping* pour décrire la transformation d'une onde de forme et de topologie donnée en une onde d'une autre forme ou topologie, et en particulier la transformation d'une onde régulière en singulière et vice versa.

### Topologie et distributions lumineuses compactes

Une distribution lumineuse, ponctuelle, sera réputée compacte si elle remplit une des conditions de compacité définies ci-dessous, par deux conditions alternatives et non exclusives :

soit, plus de 75% de l'énergie est contenue dans un cercle de rayon inférieur à 1.75 fois le rayon d'Airy,

soit un domaine lumineux, contenant plus de 65% de l'énergie est délimité par une ligne d'intensité nulle comprise dans un cercle de rayon inférieur à deux fois le rayon d'Airy,

Nous distinguons différentes familles de distributions lumineuses ponctuelles, de topologies différentes :

Les distributions régulières, dans leur définition usuelle en Optique,

Les distributions singulières, dénommées aussi vortices optiques, de charge topologique (ordre azimutal) $\ell$, dans lesquelles la phase varie de 0 à $2\pi\ell$, autour de la direction de propagation, $\ell$ étant un entier.

Les distributions d'amplitude à variation azimutale d'ordre $\ell$, dénommées aussi distribution de Laguerre-Gauss,

Les distributions de polarisation et optionnellement de phase à variation azimutale d'ordre $\ell$ dénommées aussi modes de Laguerre-Gauss polarisés radialement.

Deux distributions lumineuses compactes, seront réputées de familles topologiques différentes si elles remplissent au moins une, et n'importe laquelle, des conditions suivantes :

L'une est régulière et l'autre est singulière,

L'une est ponctuelle et l'autre est annulaire,

Les ordres azimutaux $\ell$ de l'amplitude des deux distributions lumineuses diffèrent,

Les ordres azimutaux $\ell$ de la polarisation ou de la phase des deux distributions lumineuses diffèrent.

Alternativement, deux distributions lumineuses projetées sur un volume donné seront réputées de topologies différentes si dans une partie conséquente de la surface illuminée conjointement, les gradients sont de direction inversées.

### Nanoémetteurs lumineux

Un nanoémetteur lumineux est un petit émetteur secondaire, attaché à un objet; il est de taille sensiblement inférieure à une fraction de longueur d'onde, typiquement mais non limité à une taille inférieure à un cinquième de la longueur d'onde ; un nanoémetteur lumineux absorbe l'énergie incidente et réémet de la lumière à la même longueur d'onde que la lumière incidente ou à des longueurs d'onde différentes ; la lumière émise par le nanoémetteur peut être cohérente, partiellement cohérente ou incohérente avec la lumière absorbée. Les principaux exemples de nanoémetteurs lumineux sont les fluorophores et les nanoparticules, mais ils incluent aussi un grand nombre d'autres éléments.

La définition, dans le contexte de l'invention, des nanoémetteurs lumineux est, déterminée par les deux conditions suivantes:

création d'un émetteur lumineux secondaire ponctuel,

et

positionnement prédéterminé de cet émetteur relativement à une entité artificielle, biologique ou organique.

Les mécanismes physiques qui peuvent créer un nanoémetteur sont nombreux ; ils incluent mais ne sont pas limités à l'absorption, la diffusion ou la réflexion, la fluorescence, «émission-déplétion», [5], par exemple en utilisant les techniques RESOLFT, les phénomènes de photo activation et de photo déplétion, la fluorescence à deux ou plusieurs photons, la diffusion élastique ou non, la diffusion Raman, ou à d'autres mécanismes physiques connues de l'Homme de l'Art. Nous utiliserons le terme émission de lumière pour décrire l'émission d'ondes électromagnétiques par le nanoémetteur lumineux, que la lumière soit cohérente, incohérente ou partiellement cohérente.

Nous étendrons notre définition des nanoémetteurs, en y incluant les particules diffusantes, absorbantes et réfléchissantes, attachées à une entité biologique ou organique ; l'action d'une particule diffusante, réfléchissante ou absorbante sur le champ électromagnétique peut en effet être décrite comme la création avec une phase inverse, suivant le principe de Babinet, pour une particule absorbante d'un champ secondaire auxiliaire, émergeant de la particule, superposé au champ électromagnétique incident.

Nous nous référerons dans cette demande de brevet aux descripteurs d'un nanoémetteur pour dénoter l'ensemble d'information décrivant un nanoémetteur en tant que source ponctuelle, à un instant déterminé. Etant donné que le nanoémetteur est considéré comme une source ponctuelle, l'ensemble de l'information le représentant contient un nombre limité de paramètres, soit : sa position dans l'espace, son intensité, les caractéristiques spectrales, d'intensité, de cohérence, de phase et de polarisation de la lumière émise par le fluorophore, en fonction de la lumière incidente.

Nous nous référerons dans cette demande de brevet aux descripteurs d'un objet structuré. Par exemple, pour une ligne uniforme, l'ensemble de l'information le représentant contient un nombre limité de paramètres, soit : son orientation dans l'espace, son intensité, les caractéristiques spectrales, d'intensité, de cohérence, de phase et de polarisation de la lumière émise par le l'objet, en fonction de la lumière incidente.

Pour une distribution continue, l'objet est représenté, comme habituel en traitement d'image, par une matrice d'intensités.

Toutefois, dans la majorité des cas, et dans la description de l'invention, nous nous référons, sous la désignation de descripteurs, à un sous-ensemble des descripteurs d'un nanoémetteur comprenant sa position géométrique, son intensité, et le type du fluorophore. lorsque plusieurs populations de nanoémetteurs lumineux, différenciées par exemple par leur spectre d'émission, sont présentes dans un même échantillon. Cette simplification utilisée dans la description n'altère pas le domaine de l'invention qui inclura dans son champ d'application l'intégralité des descripteurs des nanoémetteurs lumineux.

Pour simplifier la compréhension du contexte de l'invention, la suite de la description référence seulement le cas le plus simple, celui dans lequel le nanoémetteur est un fluorophore et l'interaction physique est la fluorescence à un photon. Pourtant, cette description doit être comprise comme une illustration simplifiée d'une description générale des méthodes et concepts applicables à l'ensemble des nanoémetteurs lumineux cités préalablement ou connus de l'Homme de l'Art, quel que soit le phénomène physique sous-jacent.

Il est marquant que le nanoémetteur échantillonne le champ ou l'intensité incidente à une position tridimensionnelle précise, sans influence de l'ensemble de la distribution spatiale de l'intensité incidente. Nous référencerons cette propriété remarquable dans cette demande de brevet comme la capacité d'échantillonnage du nanoémetteur lumineux.

Toutefois, le mode de réalisation de l'invention décrit permet aussi de mesurer des objets structurés et des distributions continues ne possédant pas la capacité d'échantillonnage du nanoémetteur lumineux.

On se réfère de nouveau à la Figure. 1 ; qui représente un ensemble de nanoémetteurs ou d'objets structurés, positionnés sur un objet biologique donné, 15 et 16 d'une part et 17 et 18 d'autre part. Alternativement, la lumière émise peut consister en une distribution continue, non représentée sur la Figure 1, ou en toute combinaison de nanoémetteurs, d'objets structurés ou de distribution continues. L'ensemble de nanoémetteurs, d'objets structurés ou de distribution continues est référencé comme un ensemble «d'objets biologiques lumineux»; ils représentent une carte de l'objet biologique, dans le sens défini par Alfred Korzybski en sémantique générale. Il est toutefois de pratique courante pour simplifier la description, de référencer l'objet biologique lumineux comme l'objet biologique lui-même, lorsqu'aucune ambiguïté ne peut apparaître. L'objet biologique lumineux contient de nombreuses informations pertinentes liées à l'objet biologique, principalement l'information spatiotemporelle, la position de l'objet et son orientation en fonction du temps, et l'information morphologique, par exemple dans le cas de la scission d'une cellule en deux.

Le système de mesure selon au moins un mode de réalisation de l'invention permettra de calculer la carte mesurée, et effectuer une évaluation des descripteurs de toute combinaison de nanoémetteurs, d'objets structurés ou une évaluation de la distribution spatiale de distributions continues. Cette carte mesurée diffère de la carte originale, en raison du bruit, des conditions de mesure, des limites du système ou de l'incertitude de mesure. Cette information de la carte mesurée peut être élaborée ultérieurement en différents niveaux d'abstraction. Ce premier niveau d'abstraction, qui décrit les résultats directs de la mesure, ne contient, à priori, aucune information biologique mais les résultats d'une mesure physique décrite par des nanoémetteurs, d'objets structurés ou de distributions continues, qui pourrait d'ailleurs représenter n'importe quelle entité marquée.

Le second niveau, le niveau d'abstraction géométrique structure les nanoémetteurs, d'objets structurés ou de distributions continues sous forme d'objets géométriques. Il consiste en une description d'objets lumineux et de leurs caractéristiques dynamiques, telles que leur position ou orientation, ou leur morphologie. A ce niveau, l'information est encore une information physique et géométrique décrivant un ensemble d'objets. L'information géométrique utilise la carte mesurée et une information auxiliaire, potentiellement extérieure au système, sur la relation entre les points lumineux et des objets.

Le niveau d'abstraction biologique permet une certaine appréhension de la réalité biologique grâce à une relation constitutive entre les objets mesurés et des entités biologiques correspondantes. Il contient un ensemble d'informations sur l'objet biologique, principalement la position et sa dynamique, sa forme et sa morphologie. L'information biologique utilise la carte mesurée et l'information géométrique, et une information auxiliaire, potentiellement extérieure au système, sur la relation des points lumineux et des objets aux entités biologiques. Un certain nombre de conclusions sur la fonctionnalité biologique de l'échantillon peuvent être obtenues à ce niveau.

Le niveau d'abstraction fonctionnel permet une appréhension de la réalité biologique. Il consiste en une information fonctionnelle, décorrélée des informations géométriques, et répondant à des interrogations en termes et jargon biologique, tel que : « le virus a-t-il pénétré la cellule ? ».

Un niveau additionnel d'information peut être défini incluant le processus de contrôle et d'instrumentation ; en effet, un processus de contrôle et d'instrumentation plus évolué peut être défini, permettant de remonter à une information biologique plus structurée, à travers une automatisation du processus d'acquisition de données. Un exemple de tels processus est décrit par Steven Finkbeiner, sous la dénomination de « Robotic Microscopy systems ».

Cette description des niveaux d'abstraction, définis dans cette demande, a été rédigée, pour simplicité, pour la Biologie. Elle est applicable, *mutatis mutandis,* à tous les domaines de la Vision, biologique et médicale, artificielle et industrielle.

### *Diffraction conique*

La diffraction ou réfraction conique, est un phénomène optique prédit par Hamilton, [6], en 1832, et confirmé expérimentalement deux mois après par Lloyd, [7]. La diffraction conique décrit la propagation d'un faisceau de lumière dans la direction de l'axe optique d'un cristal biaxe.

En effet, dans un cristal biaxe, l'axe optique est positionne dans le plan créé par le axes cristallographiques x

$$\tan\theta_0 = \sqrt{\frac{n_1^{-2} - n_2^{-2}}{n_2^{-2} - n_3^{-2}}}.$$

et z; l'angle par rapport à l'axe z est $\theta_0$, dépendant des trois indices de réfraction suivant la loi,

Hamilton a prédit que la lumière émerge sous la forme d'un cône creux de rayons. La réfraction conique est une étape importante de l'histoire des sciences et a joué un rôle dans la démonstration de la théorie des ondes électromagnétiques.

Un regain d'intérêt pour la diffraction conique eu lieu dans les dernières années du XXe siècle; elle a abouti à une théorie complète par Berry et al.[2], validée expérimentalement en 2009, [8]. Nous suivons ici la théorie, la terminologie et les définitions de Berry, y compris le changement de dénomination de l'effet physique, à partir de ce point, utilisant le terme plus rigoureux de diffraction conique.

Toutefois, il est important de noter, que le terme « diffraction conique » est aussi utilisé pour deux autres techniques n'ayant aucune relation avec la technique que nous décrivons :

- la diffraction en incidence oblique est aussi appelée diffraction conique
- Le terme anglais, « conical diffraction mounting » référence un montage de réseau de diffraction dans lequel le réseau est monté sur une surface courbe.

La diffraction conique a suscité un intérêt considérable au niveau théorique et expérimental, mais, « aucune application pratique semble avoir été trouvée », [9].

Historiquement, la diffraction conique a été observée dans les cristaux biaxes. Nous nous référons à un cristal conique pour décrire un cristal biaxe inorganique ou organique, présentant le phénomène de diffraction conique. Quelques exemples non limitatifs de cristaux biaxes comprennent, l'Aragonite, KTP, KTA, KBiW, LBO, KNbO3, MDT, YCOB, BIBO, DAST, POM, NPP, LAP, LiInS2 et LiInSe2.

D'autres effets existent, créant une diffraction conique intrinsèquement plus faible soit en créant une diffraction conique plus faible le long d'un trajet optique plus court. Toutefois, ces effets peuvent être utilisés dans le cadre des dispositifs décrits. Ces effets comprennent les polymères, les cristaux liquides et les effets de biréfringence induite par voie externe. Les polymères comprennent mais ne sont pas limités à: les feuilles de polymère étirées et à la polymérisation en cascade, [10]; les cristaux liquides comprennent mais ne sont pas limités à: la phase nématique biaxe thermotrope, [11]; les effets externes de biréfringence induite comprennent, mais ne sont pas limités à: l'application d'un champ électrique créant un effet électro-optique, sur un cristal cubique non-centrosymétrique, et le modulateur photo-élastique.

La phase dans le vortex créé par diffraction conique est une phase géométrique et est donc intrinsèquement achromatique.

Les effets chromatiques additionnels sont la dispersion de l'axe optique et la dépendance des différents paramètres présents dans les équations de la diffraction conique en fonction de la longueur d'onde.

La dispersion chromatique de l'axe optique crée un angle de l'axe optique du cristal, dépendant de la longueur d'onde, par rapport à l'axe optique du système. Elle est due, dans la majorité des cas, à la dispersion des indices de réfraction.

Les indices de réfraction dépendent de la longueur d'onde, suivant les équations de Sellmeier. L'angle de l'axe optique varie donc en fonction de longueur d'onde, il crée un angle d'inclinaison chromatique de l'axe optique dans le plan créé par le axes x et z cristallographiques.

Il dépend fortement du type de cristal. Dans un cristal de MDT, le cristal achromatique le moins dispersif dans le visible, la direction de l'axe optique varie de moins de 0,1 degrés entre 540 nm et 700 nm. Dans un cristal de KTP, le cristal plus achromatique dans l'IR de télécommunication, l'angle varie de 0,05 degrés, entre 1,350 nm et 2,100 nm, et moins de 0,02 degrés sur la fenêtre de télécommunication - 1450 nm à 1650 nm. D'autre part, $\theta_0$ peut varier fortement en fonction de la longueur d'onde dans certains cristaux organiques comme le DAST.

La compensation de la dispersion chromatique de l'axe optique peut être effectuée en utilisant l'optique géométrique. La dispersion chromatique de la direction de l'axe optique peut être compensée en utilisant la dispersion naturelle de verre ou d'autres matériaux optiques, ou en utilisant des réseaux ou de prismes. La procédure d'achromatisation ne diffère pas, dans ce cas, de la procédure standard de correction de toute aberration chromatique en optique géométrique, Cette procédure peut être conçue et optimisée en utilisant l'un des logiciels optiques commerciaux disponibles en définissant des fonctions cibles adéquates.

Un concept différent d'achromatisation, est basé sur l'utilisation de deux matériaux différents, ayant des effets de diffraction coniques inverses, à haute et basse dispersions chromatiques.

La dépendance des différents paramètres présents dans les équations de la diffraction conique en fonction de la longueur d'onde, modifie les paramètres d'efficacité des effets de diffraction conique.

Pour des cristaux coniques linéaires, définis ultérieurement, la fonction de transfert fondamentale est identique à l'unité et ainsi trivialement indépendante de longueur d'onde. Par contre, la fonction de transfert du vortex dépend de la longueur d'onde et peut être représentée par un facteur chromatique égal à $\tau(\lambda)$.

Pour des cristaux coniques sinusoïdaux, définis ultérieurement, le comportement est différent de celui de cristaux linéaires coniques: l'onde fondamentale dépend de la longueur d'onde et l'onde vortex est presque indépendante de celle-ci. Effet, les simulations montrent que la forme de l'onde vortex n'est que légèrement modifiée par une variation du paramètre, $\theta_0$ de 0,5 à 0,75. Par contre, la forme de l'onde fondamentale dépend de longueur d'onde et cet effet doit être pris en compte dans la conception de systèmes utilisant les deux ondes, fondamentale et vortex.

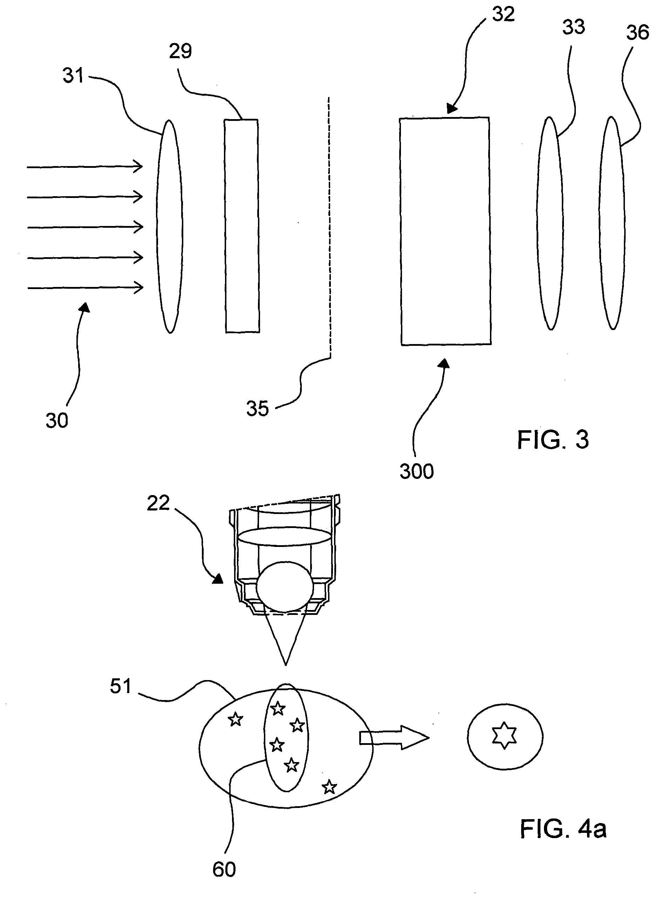

On se réfère maintenant à la figure 3, qui est une illustration schématique simplifiée d'une configuration d'un module de diffraction conique, 300, conformément à un mode de réalisation de la présente invention.

La lumière incidente, 30, est supposée être collimatée, même si d'autres conditions peuvent être adaptées en utilisant des moyens optiques simples.

Le setup lui-même comprend une première lentille, 31, un cristal conique achromatique, 32 et une lentille optionnelle 33. Les deux premières lentilles, 31 et 33, sont configurées de préférence sous forme d'un téléscope Kepler 1:1. L'ouverture numérique de la première lentille, 31, dans l'espace image, représentée ci-dessous par $U_0$, détermine les paramètres de l'effet conique à travers le rayon conique, défini ci-dessous. Un plan d'imagerie conique, 35, est placé au plan focal de la première lentille 31 ; un polariseur, ou un polariseur partiel, 29, décrit ci-dessus, peut également être ajouté. Toutefois, dans certains systèmes optiques ou la lumière incidente est déjà polarisée, cet élément n'est pas nécessaire. Une lentille de focalisation, 36, détermine la taille finale de la tache lumineuse. Elle peut être un objectif de microscope externe, ou peut être fusionnée avec la seconde lentille 33. La répartition de la lumière projetée sur l'échantillon est, en première approximation, en négligeant les effets vectoriels une image réduite de la distribution de la lumière dans le plan image. L'influence des effets vectoriels sera discutée ci-dessous. Le rapport d'échelle ou le grossissement est déterminé par un objectif de microscope.

Soit la variable spatiale, R, au plan d'imagerie conique, et le vecteur d'onde, U, représentées en coordonnées cylindriques par R, $\theta_R$ et U, $\theta_U$. Soit $\lambda$, la longueur d'onde de la lumière.

Le comportement du champ électrique émergeant du cristal conique 32 est entièrement caractérisé par un seul paramètre, le rayon conique, $R_0$; le rayon conique dépend du matériau et l'épaisseur du cristal.

Nous introduisons des paramètres normalisés permettant à la description ci-dessous de la répartition de la lumière, d'être valide à la fois au plan d'imagerie conique et au foyer de l'objectif du microscope, dans les limites de la théorie scalaire de diffraction. Un exemple d'introduction des paramètres normalisés est décrit dans la référence [2]

La position radiale normalisée, p, le vecteur d'onde normalisée, u, représentés en coordonnées cylindriques par p, $\theta_R$ et u, $\theta_U$, et le rayon normalisé conique, po, sont donnés par:

$$\boldsymbol{\rho} = 2\frac{\mathbf{R}}{\lambda}U_0, \qquad \mathbf{u} = \frac{\mathbf{U}}{U_0}; \qquad \rho_0 = 2\frac{R_0}{\lambda}U_0. \qquad (EQ.\ 3)$$

$$\boldsymbol{\rho} = 2\frac{\mathbf{R}}{\lambda}U_0, \qquad \mathbf{u} = \frac{\mathbf{U}}{U_0}; \qquad \rho_0 = 2\frac{R_0}{\lambda}U_0. \qquad (EQ.\ 4)$$

$U_0$ étant l'ouverture numérique du système. Pour $\rho_0 < 0{,}5$, nous faisons référence ici à un cristal conique mince; pour $\rho_0 \ll 1$, nous nous référons ici à la forme d'un cristal conique mince linéaire, pour $\rho_0 < 0.5$ et $>1$, à un cristal conique mince sinusoïdal et pour $1 < \rho_0 < 6$, à un cristal conique moyen.

L'onde émergeante du cristal conique mince, $E(\rho, \theta_R)$, exprimée en coordonnées normalisées pour une onde polarisée circulairement, est constituée par la superposition de deux ondes, référencées ici comme l'onde fondamentale, $E_F(\rho)$, une onde régulière, et l'onde vortex, Ev $(\rho, \theta_R)$, une onde singulière; ces deux ondes sont cohérentes l'une avec l'autre, collocalisées, polarisées circulairement et de chiralité inverse :

$$\mathbf{E}(\rho, \theta_R) = \mathbf{E}_F(\rho) + \mathbf{E}_V(\rho, \theta_R) = E_F(\rho)\begin{pmatrix} 1 \\ -i \end{pmatrix} + F_V(\rho)\exp\left(-i\theta_R\right)\begin{pmatrix} 1 \\ i \end{pmatrix} \qquad (EQ.\ 5)$$

Dans cette équation, $E_F(\rho)$ est l'amplitude fondamentale scalaire, $F_V(\rho)$ est l'amplitude scalaire de vortex réduite; elles sont donnés par:

$$E_F(\rho) = 2\pi\int du\ u\cos(\rho_0 u)J_0(\rho u); \quad F_V(\rho) = 2\pi\int du\ u\sin(\rho_0 u)J_1(\rho u). \ (EQ.\ 6)$$

Pour un cristal conique mince linéaire, l'onde fondamentale peut être approximée par une tache d'Airy et l'onde de vortex peut être approximée à un vortex linéaire, représenté par:

$$F_V(\rho) = 2\pi\rho_0\int du\ u^2\ J_1(\rho u). \qquad (EQ.\ 7)$$

En supposant que l'action du polariseur partiel, 29, la réduction de l'intensité de l'onde vortex d'un facteur $\alpha$, les paramètres de Stokes peuvent être déduits des équations précédentes, $\beta$ étant l'angle de la polarisation linéaire:

$$\begin{aligned} S_0 &= \left(E_F(\rho)\right)^2 + \left(\alpha^2 F_V(\rho)\right)^2 \\ S_1 &= 2\alpha E_F(\rho)F_V(\rho)\sin\theta_R; \ S_2 = 2\alpha E_F(\rho)F_V(\rho)\cos\theta_R; \\ S_3 &= \left(E_F(\rho)\right)^2 - \left(\alpha^2 F_V(\rho)\right)^2 \\ \beta &= \theta_R; \end{aligned} \qquad (EQ.\ 8)$$

Nous utiliserons les termes d'un objet parcimonieux « sparse object » en anglais, pour décrire un ensemble d'émetteurs lumineux ponctuels, d'un nombre inférieur à douze, positionné dans un volume dont la taille, dans chacune des dimensions, est inférieure à 3 longueur d'ondes, à la longueur d'onde d'émission ou de réflexion des émetteurs. Le volume de taille inférieure à 3 longueurs d'ondes, qui contient l'objet clairsemé, sera référencé comme un volume d'analyse de taille réduite.

Nous utiliserons le terme d'objet continu pour décrire un ensemble d'émetteurs lumineux ponctuels ou continus, ne remplissant pas les conditions décrites précédemment dans la définition de l'objet clairsemé.

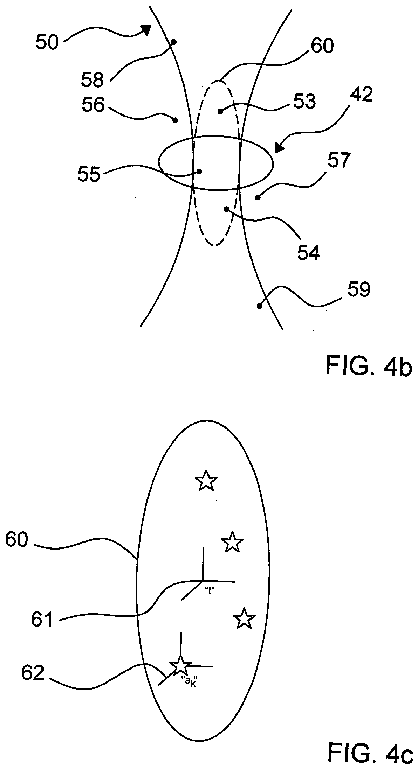

On se réfère maintenant aux figures 4a à 4c qui sont une représentation simplifiée du concept de confinement volumique du microscope confocal.

La fonctionnalité du confinement volumique est de limiter, dans les trois dimensions spatiales, la région observée de l'échantillon à un volume de taille la plus petite possible, le volume d'analyse. La fonctionnalité du confinement volumique limite le volume d'analyse par la combinaison de deux effets : le confinement de la lumière projetée sur une petite surface, idéalement de la taille de la tâche d'Airy, 50, et l'élimination de la lumière défocalisée par le trou confocal, 28 de la Figure 2. La superposition de ces deux effets crée un petit volume, le volume d'analyse, 60. Ce volume détermine la taille de la région élémentaire détectée par le système.

Considérons un objet parcimonieux ou continu, 51, consistant en un ensemble de nanoémetteurs, 53 à 59. Les nanoémetteurs 53 à 55 positionnés dans le volume d'analyse 60, et seulement eux, sont à la fois excités par la source lumineuse et les photons émis par eux arrivent au module du détecteur. Les nanoémetteurs ne se trouvant pas dans le cône d'éclairage, 56 et 57, ne sont pas illuminés par la lumière incidente. La lumière émise par les nanoémetteurs 58 et 59 ne se trouvant au plan conjugué du trou confocal, 28 de la Figure 2, est bloquée, presque intégralement, par le trou confocal, 28 de la Figure 2.

Deux repères cartésiens différents sont définis dans le système, Figure 4c:

Le référentiel « i » : Les axes référencés « i » représentent un repère cartésien centré sur le centre du volume d'analyse, 61.

Le référentiel « a » : Les axes référencés « a » représentent un repère cartésien centré, pour chaque nanoémetteur lumineux, sur le nanoémetteur lumineux considéré comme un point discret, 62,

Lorsque, en utilisant un mode de réalisation de l'invention qui sera décrite ultérieurement, on projette un vortex sur l'échantillon sous analyse, le centre du vortex sera en général défini comme le centre du volume d'analyse.

Le mode principal de réalisation de l'invention utilise la diffraction conique pour réaliser les modules optiques fondamentaux de la technique. Toutefois, des implémentations alternatives, remplaçant les modules basés sur la diffraction conique, par des modules basés sur d'autres concepts optiques, sont en mesure de fournir les mêmes fonctionnalités. Elles font partie intrinsèquement du champ de cette invention. Les concepts optiques alternatifs comprennent mais ne sont pas limités aux cristaux uniaxes, aux réseaux à pas inférieur à la longueur d'onde, « subwavelength gratings », aux modes de laser structurés, aux composants holographiques et à d'autres techniques connues de l'Homme de l'Art,

Les concepts, techniques et dispositifs optiques et optoélectroniques sont décrits dans par exemple le livre écrit par D. Goldstein, «Polarized light», [12], le « Handbook of Confocal Microscopy », [13], le « Handbook of Optics », [14].

### *Sémaphore optique*

Nous utilisons le terme de sémaphore optique pour décrire un élément optique, passif ou actif, capable de canaliser la lumière incidente vers différents canaux ou détecteurs en fonction d'une propriété de la lumière. Le cas le plus simple est une lame dichroïque qui sépare la lumière en deux canaux en fonction de la longueur d'onde.

Nous utilisons le terme, en anglais, de « Position dependent Optical Semaphore » - acronyme PDOS - ou sémaphore optique dépendant de la position - pour décrire un sémaphore optique qui canalise la lumière en fonction de la position du point émetteur. Le PDOS sera déterminé par une série de fonctions de transfert, $T_i(x,y,z)$ dépendant, pour chaque canal ou détecteur i, de la position de l'émetteur $(x,y,z)$, dans un volume de référence. L'ordre du PDOS sera le nombre de canaux ou détecteurs. Le PDOS sera « sans perte », lossless en anglais, dans un volume d'analyse, si la somme des fonction de transfert, $T_i(x,y,z)$ est égale à l'unité dans le volume d'analyse.

Le trou confocal, décrit par Minsky, [15], est considéré comme un PDOS dégénéré d'ordre 1.

Dans la majorité des cas la dépendance du PDOS est une fonction complexe des positionslatérales et longitudinale. Toutefois, nous utilisons le terme, en anglais, de « Longitudinal Position dependent Optical Semaphore » - acronyme LPDOS - ou sémaphore optique dépendant de la position longitudinale - pour décrire un sémaphore optique qui canalise la lumière en fonction de la position longitudinale du point émetteur. Le LPDOS sera déterminé par une série de fonctions de transfert, $T_i(z)$ dépendant, pour chaque canal ou détecteur i, de la position longitudinale de l'émetteur $(z)$, dans un volume de référence. L'ordre du PDOS sera le nombre de canaux ou détecteurs. Le LPDOS sera « sans perte », lossless en anglais, dans un volume d'analyse, si la somme des fonction de transfert, $T_i(z)$ est égale à l'unité dans le volume d'analyse. Le LPDOS sera souvent couplé à un stop, limitant le champ latéral du système.

*Transmission par des fibres optiques*

Une utilisation principale des fibres optiques est la transmission exclusive du mode TEMoo. Toutefois, certaines configurations de fibres optiques, telles que les FMF ou les vortex Fibers, principalement mais non exclusivement basées sur des fibres dites « Photonic Crystal Fiber » (en anglais) - acronyme PCF - permettent la transmission simultanée ou non, de modes plus complexes, y compris des modes de vortex, ayant une vorticité égale ou inférieure à 2. Il serait donc possible de déporter les distributions optiques créées par la diffractionconique à l'aide de fibres optiques, permettant une simplification majeure du système optique.

La possibilité de déporter les distributions optiques créées par la réfraction conique à l'aide de fibres optiques permet l'application des modes de réalisation de l'invention à de nombreuses applications supplémentaires, par exemple mais non limité à l'observation gastrique ou gastroentérologique, et à l'observation du colon et des voies urinaires.

De plus, certaines fibres les « dual-core photonic crystal fibers », en anglais, [16], permettent une interaction entre deux modes, l'un d'entre eux pouvant être un vortex, et fournissent un mécanisme physique supplémentaire pour créer des fonctions de transfert diversifiées.

*Mesures à plusieurs longueurs d'onde*

L'objet peut être éclairé en lumière monochromatique et en utilisant par exemple un laser classique ou une lampe monochromatique. Cette configuration est simple, car un des paramètres principaux du système est fixe et bien déterminé. Toutefois, l'objet peut aussi être éclairé à plusieurs longueurs d'onde, soit de façon discrète, en utilisant par exemple plusieurs lasers, soit de façon continue, en utilisant par exemple une lampe ou un laser ayant un spectre plus large.

De nombreux systèmes de superrésolution existants mesurent simultanément ou séquentiellement à plusieurs longueurs d'ondes. En effet, il est possible de marquer des éléments similaires ou différents avec des fluorophores ayant des réponses spectrales différentes, permettant de les reconnaître et de les séparer. Il est important de présenter deux cas différents :

- L'utilisation de marqueurs fluorescents, émettant à deux longueurs d'ondes différentes, excités par la même longueur d'onde
- L'utilisation de marqueurs fluorescents émettant à deux longueurs d'ondes différentes ou similaires, excités par deux longueurs d'ondes différentes

Il faut noter que dans le cas de l'utilisation de marqueurs fluorescents, émettant à deux longueurs d'ondes différentes, excités par la même longueur d'onde, le problème du recalage entre les mesures d'une longueur d'onde par rapport à la seconde, sont intrinsèquement inexistants car l'information de position de superrésolution est dérivée de la projection de la lumière, qui est parfaitement identique pour les différentes longueurs d'onde.

Ceci permet une calibration relative de la position de fluorophores à deux longueur d'onde différentes, avec une précision limitée seulement par le système expérimental de calibration, enlevant le problème majeur du recalage entre deux images de longueur d'onde différentes.

La possibilité d'achromatiser les systèmes optiques basés sur la diffraction conique en font un outil de choix pour l'implémentation de systèmes optiques, a chemin commun, pour de nombreuses applications, et plus particulièrement pour des modes de réalisation de l'invention décrits.

L'achromatisation est aussi possible pour les systèmes optiques basés sur les cristaux uniaxes, et pour presque toutes les implémentations alternatives de cette invention, avec, pour chacun d'entre eux, une complexité pratique plus ou moins grande.

D'autres systèmes de fluorescence existants utilisent une lumière ayant un contenu spectral plus large, pour réduire des artefacts, et principalement les effets de speckle.

Corollairement, les propriétés spectrales des protéines fluorescentes permettent de mesurer le potentiel des interactions moléculaires intracellulaires en utilisant la technique de transfert d'énergie de Förster - Förster (Fluorescence) Resonance Energy Transfer (FRET).

Dans certaines implémentations des systèmes PSIT, la lumière d'un ou des faisceaux laser incidents est séparée à l'aide d'un séparateur de lumière en deux faisceaux, le faisceau principal qui accomplira la fonctionnalité du système PSIT, et un faisceau supplémentaire de faible intensité utilisé pour mesurer la position du faisceau laser à l'aide d'une caméra ou d'un détecteur de position. Ce dispositif permet de mesurer en temps réel la position du laser indépendamment de toute erreur de wobble ou autre erreur mécanique avec une très haute précision.

## Utilisation des interactions non-linéaires dans la superrésolution et famille de techniques RESOLFT et STED

L'utilisation des interactions non linéaires dans un milieu matériel, entre deux faisceaux de lumière, a été proposée en 1994 par Hell, [5] et [17], comme base d'un système de super résolution. De nombreuses techniques différentes ont découlées des travaux de Hell créant plusieurs familles de techniques, telle que le RESOLFT et la « localization microscopy ». Plusieurs revues de ces techniques ont été publiées telle que celle de Schermelleh et al. [1].

Ces interactions non linéaires incluent mais ne sont pas limitées aux phénomènes d'interaction à deux photons, aux effets d'émission-déplétion, de clignotement (blinking en anglais) et de photoactivation sur lesquels sont basées la famille de technologie RESOLFT et la famille de technologies de « localization microscopy ».

La famille de technologies RESOLFT est bien connue et est décrite dans plusieurs références, telles que l'article initial de Hell [5] et du brevet initial [17], ou par Schermelleh et al. [1], ou dans des publications récentes, Vicidomini et al. [18], ou de Willig et al. [19].

Dans la technique STED décrite dans l'article initial de Hell [5], deux faisceaux sont projetés, séquentiellement sur l'objet: un faisceau d'excitation standard, modélisé dans la majorité des cas par une distribution de lumière décrite par une fonction d'Airy, et un faisceau de déplétion - ayant une forme de doughnut ou vortex ; l'effet de la déplétion est d'empêcher la fluorescence des fluorophores se trouvant dans la surface de la distribution de lumière de déplétion, tout en ne modifiant pas l'émission des fluorophores positionnés au centre de la distribution de lumière en dehors de la distribution de lumière de déplétion; ceci permet de créer une distribution de lumière d'émission équivalente plus petite que la distribution de lumière d'excitation initiale. Cette technique a permis de réaliser des distributions de lumière d'émission équivalentes de très petite taille, tout en nécessitant toutefois des énergies de déplétion lumineuses très importantes.

Plusieurs variantes du STED ont été développées : le « CW STED », [20], le « gated STED », [21], et le « modulated STED » [22]. Dans le CW STED le laser pulsé utilisé dans la première version du STED est remplacé par un laser continu - plus simple. Dans le « gated STED » les photons émis sont discriminés en fonction de leur temps d'émission pour écarter les photons émis depuis des fluorophores n'ayant pas reçu suffisamment de temps le faisceau de déplétion; le « modulated STED» utilise un faisceau d'excitation modulé en intensité, en combinaison avec une détection synchrone dépendant de la fréquence de modulation. Ceci permet de discriminer le signal de fluorescence créé par le faisceau d'excitation de la fluorescence résiduelle provoquée par le faisceau de déplétion.

Le doughnut - ou vortex - était créé, dans la première version du STED, à l'aide d'une lame de phase variant spatialement, « phase plate» en anglais. Cette implémentation nécessite l'utilisation de deux chemins optiques séparés pour les deux faisceaux, le faisceau d'excitation et le faisceau de déplétion. Ce montage optique est complexe, fortement dépendant de toute dérive mécanique, et crée des alignements optiques complexes. Le système mis au point nécessite une forte technicité et le cout du système est important. De plus, cette implémentation est chromatique, car la lame de phase adaptée à une longueur d'onde ne le sera plus à une autre longueur d'onde. Le système optique n'étant pas achromatique, l'utilisation d'un STED à deux longueurs d'onde de déplétion nécessite un système optique encore plus complexe.

Pour simplifier la mise en œuvre du STED, plusieurs auteurs ont proposé des solutions permettant de réaliser un STED dans lequel les deux faisceaux, le faisceau d'excitation et le faisceau de déplétion, se propageraient suivant le même chemin optique :

- Wildanger et al. ont proposé un Microscope STED à chemin optique commun, insensible à la dérive mécanique, basé sur les propriétés de dispersion des différents matériaux optiques, [23],
- Bokhor et al. [24], propose l'utilisation d'une séparation annulaire chromatique des faisceaux préalignés ; toutefois cette solution bloque une partie de la lumière de déplétion,
- Hoeffman [25], propose l'utilisation d'un module contenant les éléments optiques préalignés créant le vortex, dans le chemin optique du laser de déplétion, pour simplifier l'alignement,
- Menon et al ; [26], propose des lentilles diffractives permettant de créer des zéros d'amplitude sans singularités de phase,
- Reuss et al. [27] introduit un dispositif de formation de faisceau placé directement en face de la lentille d'objectif. Ce dispositif se base sur l'utilisation de cristaux biréfringents, montés sous forme d'une lame d'onde segmentée, consistant en quatre segments. Par un choix du paramètre d'épaisseur de la lame, il est possible de réaliser un élément consistant en une lame de phase pour la déplétion et une lame neutre pour l'excitation. Cette technologie est commercialisée sous le nom d'EasyDONUT par la société Abberior [28].

Toutefois, les solutions proposées décrites antérieurement sont toutes fortement chromatiques et sont conçues pour une seule longueur d'onde d'excitation et de déplétion. Toutefois, les applications biologiques nécessitent dans de nombreux cas un système à deux ou plus, longueurs d'onde d'excitation. En effet, il est de pratique courante de marquer des éléments biologiques différents avec des marqueurs fluorescent différenciés par leur longueur d'onde d'excitation ou d'émission. Les systèmes de fluorescence les plus évolués peuvent utiliser quatre à six marqueurs différenciés. La présence d'une seule voie de super résolution limite fortement l'utilisation des systèmes. Des systèmes STED à deux longueurs d'onde sont d'ailleurs disponibles commercialement. Il est clair que pour un microscope STED achromatique l'utilisation du même chemin optique pour deux faisceaux de déplétion à deux longueurs d'onde différentes simplifiera la super résolution sur des fluorophores différents.

Dans l'Art Antérieur, pour l'ensemble des solutions proposées pour le STED, les faisceaux laser initiaux, sont sous forme d'une distribution régulière et dans la majorité des cas d'une distribution gaussienne. Ces faisceaux laser initiaux seront ultérieurement transformés en faisceau d'excitation, une onde régulière, et en faisceau de déplétion, une onde singulière, par un système optique adéquat, décrit par les différents inventeurs. Colocaliser ces faisceaux en amont lorsqu'ils sont encore sous forme de distribution gaussienne est relativement simple. Colocaliser ces faisceaux en aval lorsqu'ils ont été transformés en onde régulière et singulière est beaucoup plus complexe. Colocaliser ces faisceaux en amont peut être réalisé de façon commerciale par des systèmes de banc laser en utilisant des techniques basées sur les fibres optiques. Il est donc relativement aisé comme il est d'ailleurs fait dans l'ensemble des microscopes confocaux, de créer un ensemble de sorties laser à différentes longueurs d'ondes d'une même fibre optique et donc colocalisées de façon très précise.

La solution proposée dans des modes de réalisation de la présente invention permet de se baser sur cette colocalisation en amont, simplifiant de beaucoup le système et permettant la réalisation d'un STED à plusieurs longueurs d'onde, de façon intrinsèque. Pour ceci, il est préférable d'utiliser un système optique qui combine les propriétés de **chemin optique commun, d'achromaticité** et de « **beam shaping** ». Il est préférable de réaliser un beam shaping différent pour les différents faisceaux, soit une onde régulière pour le faisceau d'excitation et une onde singulière pour le faisceau de déplétion, et ceci à n'importe quelle longueur d'onde dans le spectre visible ou infrarouge. La capacité de réaliser un beam shaping **achromatique,** permettant d'obtenir pour une polarisation une onde régulière et pour une autre polarisation, une onde singulière, sur l'ensemble de la lumière visible ou infrarouge, diffèrent pour les différentes polarisations, est nouvelle. Le module PSIT permet la réalisation d'un tel système optique qui combine les propriétés de chemin optique commun, d'achromaticité et de « beam shaping ».A notre connaissance, il n'existe pas en effet un système à chemin commun, achromatique et permettant un beam shaping différent pour les différents faisceaux, dans la littérature. Un tel système améliorerait certainement la simplicité de conception et d'utilisation du STED.

### Information a priori et information complémentaire

Des modes de réalisation de l'invention décrite permettent l'intégration et la fusion d'information supplémentaire externe à la plateforme décrite, optique ou contextuelle, pour obtenir une amélioration de la précision de l'information recueillie de l'échantillon pour l'un quelconque des niveaux d'abstraction cités : la carte, le niveau d'abstraction géométrique, le niveau d'abstraction biologique et le niveau d'abstraction fonctionnel.

Plus généralement, la diversité spectrale, l'information obtenue à plusieurs longueurs d'onde, la diversité de polarisation, et l'information obtenue en projetant différents états de polarisation, étend l'étendue de l'information disponible.

Le fait que l'absence d'énergie, par exemple dans le cas du zéro du vortex, est une information pertinente, ouvre des possibilités supplémentaires à l'acquisition d'information sans « coût » en nombre de photons. Cette situation a une grande importance pour la détection de phénomènes de fluorescence faible, comme par exemple l'autofluorescence.

Une des modalités décrites sera référencée sous le nom du dark tracking.

Nous introduisons le concept d'information intégrale optique, l'information qui pourrait être récupérée à partir de mesures optiques ou par ondes électromagnétiques, sur une cible, par un observateur, à partir d'un point de vue donné. Cette information contient de très nombreux paramètres de l'objet, liés à sa position, les matériaux qui la composent, sa température, ou son orientation.

L'information intégrale optique ne contient pas, par contre, des informations sur des régions de l'objet n'ayant pas de chemin optique vers l'observateur, par exemple un élément positionné dans une boite opaque, ou une information physique qui n'a pas de transcription optique.

### Mesures superrésolues et limite de diffraction

Il a été considéré longtemps que l'optique limitait intrinsèquement la résolution de tout système optique, à travers la limite de diffraction. L'apparition de techniques de superrésolution - dans différents domaines et sous différentes dénominations - a montré qu'il est possible de dépasser cette limite de diffraction, par différents moyens.

Des modes de réalisation décrits dans cette invention, tels que la détection de la présence de deux points de même intensité, par projection d'un vortex au centre de gravité de la distribution lumineuse créée par l'onde fondamentale, ne sont pas limités en résolution a priori et pourrait idéalement -avec un nombre de photons infini - obtenir n'importe quelle résolution, comme nous le décrirons ultérieurement pour un cas spécifique.

*Acronymes*

Nous utiliserons dans cette demande de brevet l'acronyme, SRCD, « Super Resolution using Conical Diffraction » pour nommer la plateforme, les modules et systèmes spécifiques à l'implémentation de cette invention.

Nous utiliserons dans cette demande de brevet l'acronyme, PSIT, méthode de projection d'une séquence d'intensités lumineuses différant topologiquement, soit en anglais : « Projected Sequence(s) of Intensifies with various Topologies » ; la méthode PSIT peut aussi être utilisée pour projeter des séquences d'intensités lumineuses différant topologiquement, à deux ou plusieurs longueur d'onde, séquentiellement ou simultanément.

Nous utiliserons dans cette demande de brevet l'acronyme, PDOS, sémaphore optique à dépendance spatiale, soit en anglais : «Position Dependent Optical Semaphore».

La plateforme SRCDP, « Super Resolution using Conical Diffraction Platform», est une plateforme de Microscopie utilisant des modules optiques basés sur la diffraction conique.

Nous utiliserons dans cette demande de brevet l'acronyme, LatSRCS pour nommer le module optique implémentant la méthode PSIT à l'implémentation de cette invention.

Nous utiliserons dans cette demande de brevet l'acronyme, LongSRCS pour nommer le module optique implémentant la méthode PDOS.

La plateforme SRCDP, décrite en détails par la suite, consiste principalement en deux modules matériels, deux modules optiques nouveaux et complémentaires, les modules optiques LatSRCS et LongSRCS, montés sur un microscope, et un module algorithmique, SRCDA, permettant de reconstruire l'information superrésolue de l'échantillon. De plus la plateforme SRCDP, inclut un module de détection amélioré, un module de contrôle du système, et un support informatique et logiciel.

De plus, certaines variantes concernent un nombre important de variantes d'implémentations des méthodes PSIT et PDOS, de la plateforme SRCD, des modules optiques LatSRCS et LongSRCS et de l'algorithmique, SRCDA.

La fonctionnalité du microscope confocal est de limiter, dans les trois dimensions spatiales, la région observée de l'échantillon à un volume de taille la plus petite possible, le volume d'analyse.

En corollaire, dans un microscope de fluorescence confocal, l'information acquise est une valeur unique d'intensité pour l'ensemble du volume d'analyse, conçu comme une entité unique. Plus clairement, l'information détaillée de la position des nanoémetteurs à l'intérieur du volume d'analyse n'est pas accessible, a priori, dans un microscope confocal. Il était généralement admis qu'aucune information optique additionnelle ne pouvait être créée qui aurait permis une discrimination supplémentaire à l'intérieur du volume éclairé.

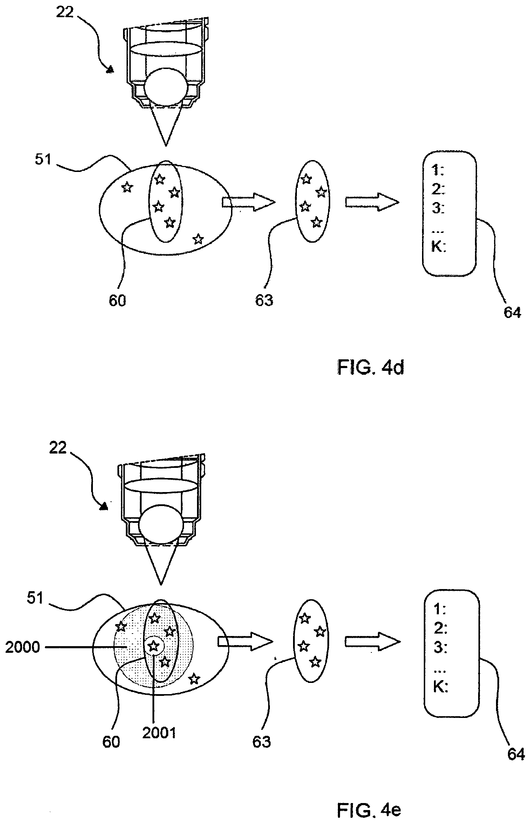

On se réfère maintenant à la Figure 4d, qui est une représentation conceptuelle simplifiée du paradigme de mesure selon au moins un mode de réalisation de l'invention. Le paradigme de mesure est beaucoup plus ambitieux que celui du microscope confocal de fluorescence, représenté schématiquement dans la Figure 4a.

Dans la figure4d, un volume d'analyse, 60, est créé au plan focal de l'objectif du microscope, 22 ; il contient un objet clairsemé, 51, consistant en plusieurs nanoémetteurs, 53 à 59; le résultat du système est un objet parcimonieux reconstruit, 63, et une liste des nanoémetteurs et une liste de leurs attributs, 64. Toutefois, l'utilisation d'un objet parcimonieux dans la figure 4d est à fin d'illustration et cette figure aurait parfaitement pu représenter un objet continu, *mutatis mutandis.*

On se réfère maintenant à la Figure 4e, qui est une représentation conceptuelle simplifiée d'un autre paradigme de mesure selon au moins un mode de réalisation de l'invention. Dans la Figure 4e, un volume d'analyse, 60, est créée au plan focal de l'objectif du microscope, il contient un objet clairsemé, 51, comprenant plusieurs nanoémetteurs, 53 à 59 ; une ou plusieurs ondes de déplétion, 2000, réduisent par un effet de déplétion, le volume d'analyse à un volume plus petit représenté par 2001. Seul un des nanoémetteurs dans le schéma considéré émet, et ceci nous permet d'obtenir une image complète de l'objet.

Le processus optique composé comprend la réalisation d'une série de processus optiques de mesure, contrôlés par le module de contrôle du système, en variant les séquences d'illumination et/ou les fonctionnalités des canaux et/ou la position de la séquence d'illumination en fonction de données mesurées ou d'information externes. Un exemple de processus optique composé selon un mode de réalisation de l'invention sera détaillé ci-dessous.

**Méthode de mesure PSIT**

Une méthode de mesure PSIT selon un mode de réalisation de l'invention non revendiqué une séquence de distributions lumineuses de topologies différentes est projetée sur le volume d'analyse.

La méthode de mesure PSIT réalise les fonctions suivantes :

   ◦ Projection d'une séquence, la séquence d'émission, de distributions lumineuses compactes de familles topologiques différentes sur un échantillon; et
o Pour chaque distribution lumineuse compacte :

- émission de lumière par les nanoémetteurs de l'échantillon,
- création, à l'aide de l'optique du microscope, d'une image optique,
- acquisition de l'image optique par un détecteur photoélectrique et création d'une image numérique.

Plus en détails, il est à noter que :

La séquence d'émission consiste en, au moins deux, distributions lumineuses ponctuelles, de familles topologiques différentes

La séquence d'émission est projetée sur un échantillon biologique marqué par des nanoémetteurs, L'émission lumineuse émergente de chaque nanoémetteur est dépendante, pour chaque nanoémetteur, de l'intensité, dans le cas incohérent, ou du champ électromagnétique dans le cas cohérent, incidents à la position spatiale, tridimensionnelle du nanoémetteur lumineux susdit propriété d'échantillonnage du nanoémetteur lumineux discutée préalablement.

Pour chaque distribution lumineuse de la séquence d'émission projetée sur l'échantillon, une image optique est créée. L'ensemble des images correspondantes à l'ensemble des distributions lumineuses de la séquence d'émission est référencée comme la séquence d'images.

La méthode PSIT selon ce mode de réalisation permet d'acquérir une information essentiellement latérale, c'est-à-dire la position latérale chacun des nanoémetteurs.

Dans un mode de réalisation, la méthode PSIT est implémentée par la projection de distributions lumineuses de topologies différentes créées par diffraction conique et modifiées par une variation des états de polarisation d'entrée et de sortie.

Dans un mode de réalisation, la méthode PSIT peut aussi être utilisée pour projeter des séquences d'intensités lumineuses différant topologiquement, à deux ou plusieurs longueurs d'onde, séquentiellement ou simultanément.

### Méthode PDOS

Une méthode PDOS selon un mode de réalisation de invention non revendiqué comprend la distribution par un « sémaphore optique», de la lumière réémise par les nanoémetteurs ou par l'objet continu entre au moins deux détecteurs.

Idéalement, la fonction du sémaphore optique est de séparer sur des détecteurs différents des régions différentes du volume d'analyse. Pratiquement, le sémaphore optique crée, pour chaque détecteur, une fonction de transfert de la lumière émise par un nanoémetteur lumineux, dépendant de la position dans l'espace du nanoémetteur lumineux et différente pour les différents détecteurs.

Dans un mode de réalisation, la méthode PDOS est implémentée de façon à séparer sur des détecteurs différents la lumière collimatée, émergente de nanoémetteurs positionnés au plan focal de l'objectif, de la lumière non-collimatée émergente de nanoémetteurs se trouvant en-deçà ou au-delà du plan focal.

La méthode PDOS, permet d'acquérir une information essentiellement longitudinale, c'est-à-dire la position longitudinale de chacun des nanoémetteurs.

Mathématiquement, le procédé selon des modes de réalisation de l'invention réalise une fonction de transfert transformant la distribution spatiale dans l'espace des nanoémetteurs en l'information brute consistant en un ensemble d'images. L'algorithmique réalise l'opération inverse : elle reconstruit la distribution spatiale dans l'espace des nanoémetteurs à partir de l'ensemble d'images composant l'information brute.

### *L'information dans des modes de réalisation de l'invention*

Le résultat intermédiaire, l'information brute, est obtenu à l'issue de l'étape de détection. L'information brute consiste en un ensemble d'images Aop(m,n), représentant pour la distribution lumineuse o, l'image issue du canal de détection p.

Comme dans un microscope confocal, le processus de mesure analyse un volume de petite taille dans un objet de taille beaucoup plus grande. Il nécessitera donc l'ajout de modules supplémentaires, similaires à ceux d'un microscope confocal incluant un processus de balayage, un module logiciel d'intégration, d'analyse et de visualisation des données ponctuelles en surfaces et/ou en objets tridimensionnel.

En termes mathématiques l'algorithmique résout un problème inverse ou d'estimation de paramètres. Les équations du modèle sont connues et l'on dispose d'un modèle a priori, paramétrique ou non, sur la configuration des nanoémetteurs. Le modèle le plus naturel consiste à supposer un faible nombre de nanoémetteurs (objet clairsemé), mais on peut également utiliser des modèles continus, supposant la présence de structures unidimensionnelles (lignes, courbes) ou de motifs spécifiques. On peut alors parcimonieusement utiliser l'ensemble des procédures mathématiques connues de l'Homme du métier pour la résolution de problèmes inverses ou l'estimation de paramètres. Nous décrivons ultérieurement un exemple d'algorithmique adapté spécifiquement à la mesure selon un mode de réalisation de l'invention.

De plus, nous présentons, pour sa valeur emblématique, une solution nouvelle du problème de la discrimination de deux points positionnés à faible distance l'un de l'autre. Ce problème, étudié par Lord Rayleigh, est la base du critère de résolution dans de nombreux domaines de l'Optique.

Il a ainsi été décrit, de manière assez large, les caractéristiques des modes de réalisation de l'invention afin que la description détaillée de celle-ci puisse être mieux comprise, et afin que la présente contribution à l'art puisse être mieux appréciée. De nombreuses fonctionnalités supplémentaires de l'invention seront décrites ci-après.

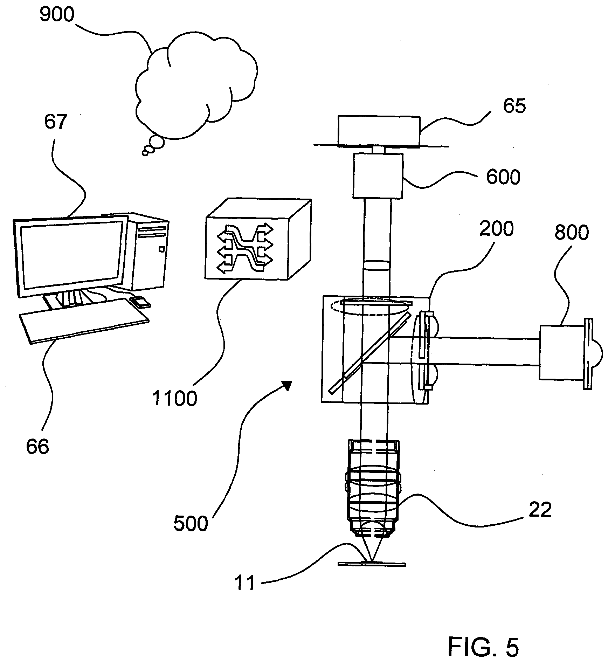

Un mode de réalisation de l'invention est une plateforme matérielle et algorithmique, référencée comme la plateforme SRCDP, 500, illustré à la Figure 5.

La plateforme SRCDP, 500, implémente la méthode selon un mode de réalisation de l'invention, en combinant les deux méthodes PSIT et PDOS décrites ci-dessus.

Dans un des modes de réalisation, la plateforme SRCDP observe, Figure 5, un échantillon biologique, 11, intégrant un ensemble de nanoémetteurs. Le résultat de l'observation de l'échantillon biologique par la plateforme SRCDP est l'acquisition d'information de superrésolution, représentative de l'échantillon observé.

La plateforme SRCDP, 500, Figure 5, comprend principalement :

Dans sa partie matérielle :

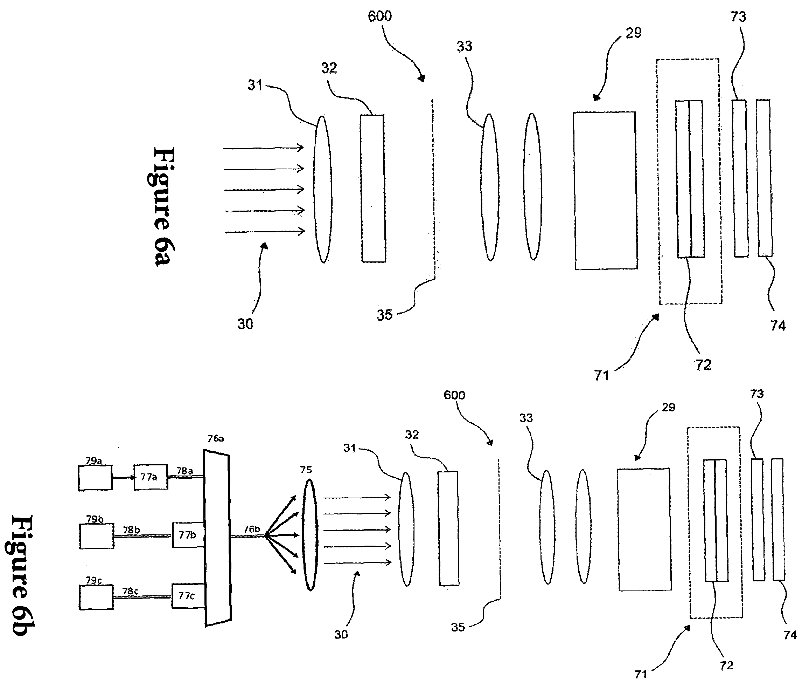

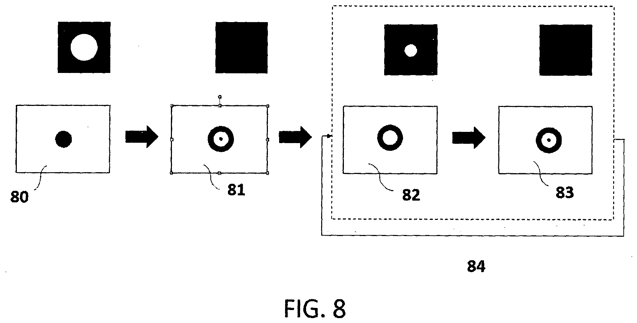

- Un microscope confocal 200, adapté ou optimisé, similaire au microscope confocal, décrit antérieurement, et comprenant l'ensemble des composants adéquats, tel que décrit antérieurement
- Deux modules optiques nouveaux et complémentaires, montés sur un microscope standard. Les deux modules optiques nouveaux sont les modules optiques LatSRCS, 700, et LongSRCS, 800, décrit en détails ultérieurement en se référant aux Figures 6 et 8, respectivement. Le module optique LatSRCS 700, implémente les étapes d'illumination nécessaires à l'implémentation de la méthode PSIT selon un mode de réalisation de l'invention. Le module optique LongSRCS, 800, implémente les étapes de distribution de l'intensité lumineuse émergente en une pluralité de images de la méthode PDOS selon un mode de réalisation de l'invention et,
- le module algorithmique SRCDA, 600, capable, à partir des images créées par la plateforme SRCDP de reconstruire l'information de superrésolution de l'échantillon biologique.
- D'autres éléments auxiliaires, tels que l'ordinateur 66 et le logiciel 67, nécessaires à la réalisation de la plateforme,

### *Module optique LatSRCS implémentant la méthode PSIT*

Nous décrivons, en se référant à la figure 6a, un module optique selon un mode de réalisation de l'invention non revendiqué le module optique LatSRCS, 700, et sa fonction spécifique en microscopie.

Le module optique, LatSRCS, 700 selon ce mode de réalisation, est un module optique, projetant sur une pluralité de nanoémetteurs d'un échantillon, une séquence de distributions lumineuses compactes de topologie différente. Chaque nanoémetteur fluoresce avec une séquence d'intensités fluorescentes lumineuses dépendant de l'intensité incidente sur le nanoémetteur et caractérisant la position latérale du nanoémetteur. Dans la plupart des modes de réalisation, les distributions lumineuses compactes de topologies différentes sont créées par l'interférence, avec des amplitudes et phases variables entre une onde régulière et une onde singulière. Dans le mode de réalisation préféré, les ondes régulière et singulière sont créées par un cristal conique mince.

Le module optique LatSRCS, 700, est positionné dans la voie d'éclairage du microscope confocal 200 ; il projette une séquence de distributions lumineuses compactes de topologies différentes sur l'échantillon 11 en utilisant l'objectif du microscope confocal 200. Dans un mode de réalisation utilisant la diffraction conique, l'intensité incidente à une position spécifique sur l'échantillon 11 sera proportionnelle, pour chaque distribution lumineuse, à une combinaison spécifique des paramètres de Stokes.

Le module optique LatSRCS, 700, utilise une fonctionnalité inhérente, décrite précédemment, spécifique au nanoémetteur, qui échantillonne l'intensité lumineuse incidente à sa position précise (du nanoémetteur) et réémet une lumière fluorescente dépendante de la lumière incidente. Il est remarquable que l'information mesurée soit directement liée à la position du nanoémetteur à l'intérieur de la distribution lumineuse compacte. Cette information est figée par la fonctionnalité du nanoémetteur, sa propriété d'absorber et de réémettre la lumière, qui rompent la chaîne optique. Cette information est portée par la lumière fluorescente, sous forme d'une distribution lumineuse émergente, récupérable par un ensemble de détection 65.

Si la lumière incidente varie dans le temps en fonction d'une séquence de distributions lumineuses compactes de topologies différentes, l'intensité de la lumière fluorescente réémise varie dans les mêmes proportions. La séquence de la lumière fluorescente réémise sera proportionnelle à la séquence des distributions lumineuses compactes de topologies différentes. A partir de cette information, il est possible de récupérer la position du nanoémetteur, comme expliqué ci-dessous.

La méthode PSIT selon des modes de réalisation de l'invention fait référence à la projection d'une séquence de distributions lumineuses compactes de topologies différentes dans un microscope, l'interaction avec l'objet parcimonieux ou l'objet continu, la collecte de la lumière réémise par l'objectif du microscope, 22, la détection de la lumière, fluorescente ou non, par l'ensemble de détection amélioré 65, et l'analyse de l'information par un algorithme approprié. Dans certains modes de réalisation, l'ensemble de détection amélioré, 65, se compose d'un détecteur unique, et ne récupère que l'intensité globale en fonction du temps, tandis que dans d'autres modes de réalisation, l'ensemble de détection amélioré se compose d'une petite zone de pixels et récupère aussi la répartition spatiale de la lumière fluorescente. L'ensemble des informations récupérées, consistant en une pluralité d'images, désigné comme les images latérales de superrésolution.

Dans un des modes de réalisation, la contribution d'un nanoémetteur positionné dans le volume éclairé à une image latérale de superrésolution spécifique est proportionnelle à une combinaison des paramètres de Stokes de la lumière incidente à la position du nanoémetteur.

Les images latérales de superrésolution, l'information créée par les distributions lumineuses compactes de topologies différentes est nouvelle, et n'était pas présente dans l'art antérieur. Cette information nouvelle permet d'affiner la position des nanoémetteurs ou la distribution spatiale de l'objet continu, de quantifier le nombre de nanoémetteurs présents dans le volume éclairé et de différencier plusieurs nanoémetteurs présents dans le même volume.

On se réfère maintenant à la figure 6a, qui est une illustration schématique simplifiée d'un module optique LatSRCS, 700, conformément à un mode de réalisation de la présente invention.

La figure 6a représente un module optique, LatSRCS, 700, il inclut tous les composants du module de diffraction conique, de la figure 3, qui sont mis en œuvre de la même manière que dans le module de diffraction conique 300. L'optique de la source lumineuse du microscope confocal à balayage est supposée être achromatique et en conjugaison infinie, même si d'autres conditions peuvent être adaptées en utilisant une optique auxiliaire. La lumière incidente, entrant depuis la source lumineuse est parallèle, 30. Le module optique 700 lui-même comprend une première lentille, 31, un cristal conique achromatique 32, ou un sous-ensemble réalisant achromatiquement la fonctionnalité d'un cristal conique comme explicité précédemment, et une seconde lentille 33; un polariseur partiel, 29, décrit ci-dessus, peut également être ajouté. Les deux premières lentilles, 31 et 33, sont configurées de préférence sous forme d'un télescope de Kepler de rapport 1:1; le plan d'imagerie conique, 35, est placé au plan focal commun des lentilles 31 et 33. L'ouverture numérique de la première lentille, 31, détermine les paramètres de l'effet de diffraction conique à travers le rayon normalisé conique, définies ci-dessous. Le second objectif, 33, restaure le parallélisme de la lumière, pour l'injecter au microscope. Il comprend en outre un sous-module de contrôle de polarisation, 71, comprenant, par exemple, une lame quart d'onde tournante, une paire de valves de lumière à cristaux liquides ou une cellule de Pockels, 72, et un analyseur 73. L'information des paramètres de Stokes peut être transformée en information séquentielle, à travers une séquence de distributions lumineuses spatialement différenciés, et portant des informations séquentielles, comme décrit ci-dessus.

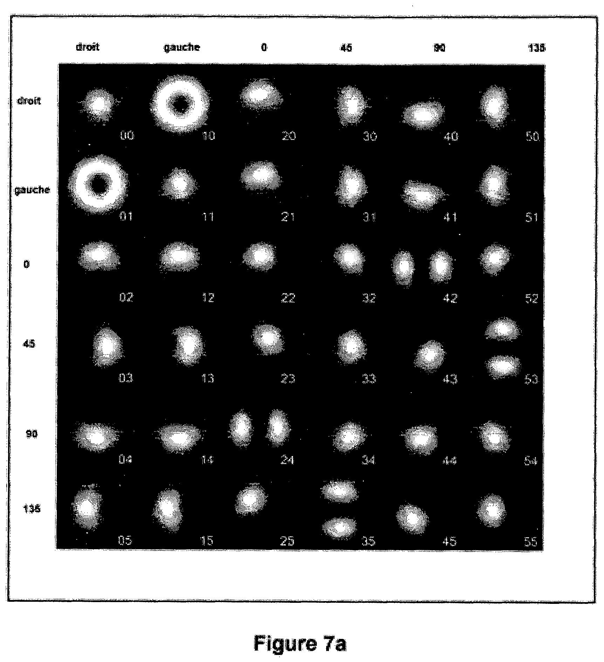

Se référant à la Figure 7a, cette figure représente les distributions lumineuses, créées à travers un cristal conique de paramètre conique normalisé po de 0.388, calculées par une approximation scalaire, pour différents états de polarisation d'entrée et de sortie, incluant en entrée ou en sortie soit un polariseur circulaire ou linéaire soit un polariseur radial ou azimutal. Ces distributions lumineuses ont été calculées dans un plan intermédiaire d'imagerie et non au foyer de l'objectif pour séparer la réfraction conique des effets vectoriels. Les états de polarisation - d'entrée et de sortie - sont caractérisés par leur angle pour les polarisations linéaires et par leurs chiralités pour les polarisations circulaires.

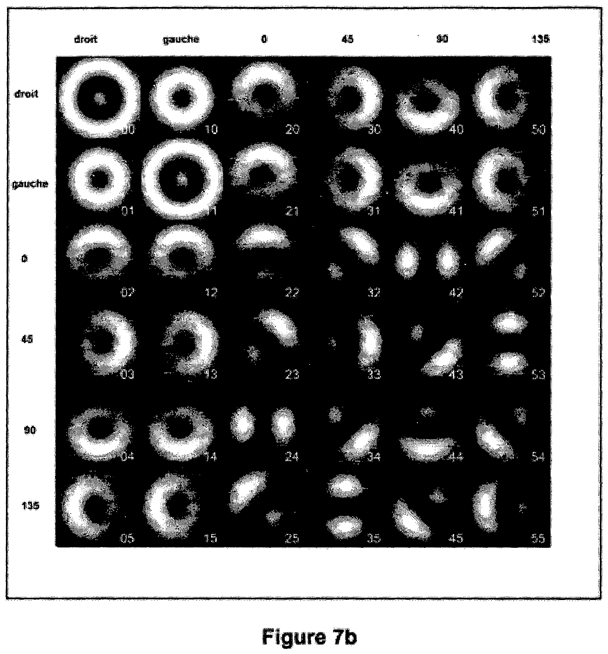

Se référant à la Figure 7b, cette figure représente les distributions lumineuses, créées à travers un cristal conique de paramètre conique normalisé po de 0.818, calculées par une approximation scalaire, pour différents états de polarisation d'entrée et de sortie, incluant en entrée ou en sortie soit un polariseur circulaire ou linéaire soit un polariseur radial ou azimutal. Ces distributions lumineuses ont été calculées en utilisant le logiciel Diffract de la société MMresearch. Ces distributions lumineuses ont été calculées dans un plan intermédiaire d'imagerie et non au foyer de l'objectif pour séparer la réfraction conique des effets vectoriels. Les états de polarisation d'entrée et de sortie sont caractérisés par leur angle pour les polarisations linéaires et par leurs chiralités pour les polarisations circulaires.

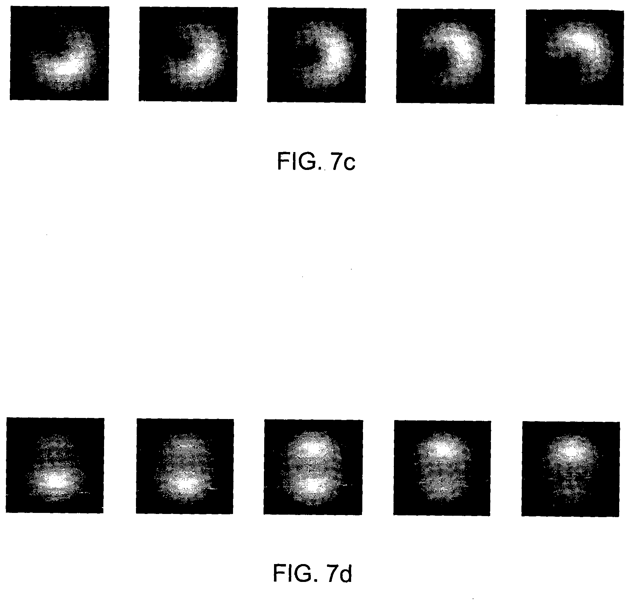

Nous présentons dans ces tables un grand nombre de fonctions de transfert différentes, incluant les cas incluant en entrée ou en sortie des polariseurs circulaires, linéaires, azimutaux ou radiaux. Il faut compléter cette description en y incluant en plus des polariseurs circulaires, linéaires, azimutaux ou radiaux décrits dans les figures, les cas de polariseurs elliptiques, dichroïques ou partiellement dichroïques, et polariseurs variant spatialement. De plus, comme illustré dans les figures 7a et 7b, ces fonctions de transfert varient fortement en fonction du paramètre conique normalisé po. De plus, l'introduction de deux cristaux coniques, ou d'un cristal conique et d'un cristal uniaxe ou biaxe (dans lequel la lumière se propage dans une direction de propagation différente de celle de la diffraction conique) en cascade permet un nombre encore plus grand de fonctions de transfert comme illustré pour deux cristaux coniques dans la figure 7c.

En résumé nous référencerons, dans cette demande de brevet, sous le terme de fonction de transfert de diffraction conique, l'ensemble des fonctions de transfert pouvant être obtenues à l'aide d'un faible (<6) nombre de cristaux en cascade, et des éléments de polarisation, statiques ou dynamiques, uniforme ou variant spatialement

Nous noterons principalement les distributions lumineuses suivantes :

- Le fondamental : Figure $7a_{00}$ et $7a_{11}$, obtenue entre polariseurs circulaires parallèles, qui est une distribution proche de la distribution d'Airy
- Le vortex : Figure $7a_{01}$ et $7a_{10}$ obtenue entre polariseurs circulaires, croisés
- La distribution que nous avons appelé la distribution en « croissant de lune » ou Stokes, les sous-figures $7a_{0,2-5}$, $7a_{1,2-5}$, $7_{a2-5}$, 0 et $7a_{2-5,1}$, et la figure 7c décrivant la variation axiale des distributions en « croissant de lune » ou Stokes. Ces distributions sont obtenues entre un polariseur circulaire et un polariseur linéaire d'angle variable; cette distribution est antisymétrique et l'axe tourne avec l'axe du polariseur linéaire,
- La distribution que nous avons appelé la distribution en « demi-lunes», sous-figures $7a_{42}$, $7a_{35}$, $7a_{24}$ et $7a_{53}$ sont obtenues entre deux polariseurs croisés ; cette distribution est symétrique.
- La distribution que nous avons appelée la distribution en « demi-lunes décalées », figure 7d, représentant la distribution en « demi-lunes décalées » à différentes positions axiales, est obtenue entre deux polariseurs elliptiques pour certaines valeurs d'éllipticité.
- Les distributions lumineuses plus complexes, Figure 7b, pour un cristal de paramètre conique normalisé, po, supérieur à 0.5
- la réalisation de distributions lumineuses additionnelles à l'aide de deux - ou plus - cristaux coniques en cascade, (non représentées) avec ou sans éléments de polarisation statiques ou dynamiques entre les cristaux

La réalisation des différentes distributions lumineuses est réalisée par la modification de la polarisation d'entrée ou de sortie. Les différentes distributions lumineuses suivent le même chemin optique et le système optique créant ces distributions est un système optique à chemin commun, tel que nous l'avons défini antérieurement. Il existe un nombre d'éléments de polarisation ayant une polarisation différente à différentes longueur d'ondes. L'utilisation d'un de ces éléments permet de créer deux ondes compactes, soit régulières soit singulières à deux longueurs d'ondes soit une onde régulière à une longueur d'onde et une onde singulière à une autre longueur d'onde. Un tel dispositif permet une implémentation beaucoup plus simple des concepts d'émission-déplétion limités dans certains cas par les tolérances ou par les vibrations du système optique.

### Redondance et variations de phase aléatoires

Les distributions lumineuses élémentaires décrites dans la Figure 7 peuvent être obtenues de plusieurs façons différentes. De plus, certaines d'entre elles peuvent être obtenues comme une combinaison linéaire d'autres distributions lumineuses élémentaires; par exemple le vortex peut être obtenu par n'importe quelle somme de deux distributions lumineuses « demi-lunes » orthogonales.

Cette redondance permet de moyenner une partie des erreurs de phases aléatoires présentes inexorablement dans de nombreux processus de mesure d'objets biologiques.

Des distributions lumineuses nouvelles peuvent être aussi obtenues comme des combinaisons mathématiques de distributions lumineuses élémentaires. La distribution lumineuse « pseudo-vortex », calculée à partir de combinaisons arithmétiques des quatre distributions en « croissant de lune »a la particularité d'avoir une très forte courbure à l'origine.

La Méthode PSIT a été conçue au départ pour permettre une superrésolution latérale ; toutefois la méthode PSIT peut aussi être utilisée pour obtenir la position longitudinale d'un nanoémetteur. En effet, certaines distributions lumineuses élémentaires sont relativement insensibles - dans des limites raisonnables - à une variation de la position longitudinale du nanoémetteur, d'autres y sont au contraire très sensibles. Une séquence de distributions lumineuses compactes, certaines d'entre elles indépendantes et certaines d'entre elles dépendantes de la position longitudinale, permettrait de remonter à la position longitudinale des nanoémetteurs.

De plus, pour les distributions lumineuses dépendant fortement de la position longitudinale du nanoémetteur, une série de distributions lumineuses élémentaires décalées légèrement longitudinalement l'une par rapport à l'autre peut être projetée sur l'échantillon, permettant un ensemble d'images contenant une information longitudinale.

De plus, certaines distributions lumineuses élémentaires plus complexes, consistant en des superpositions plus complexes d'ondes, existent avec une forte dépendance longitudinale ; par exemple les « spot tridimensionnels obscurs » décrits par Zhang, [29], créent un spot noir entouré en trois dimensions par une sphère lumineuse. Ces « spot tridimensionnels obscurs » consistent en une superposition de fonctions de Laguerre-Gauss, qui peuvent être réalisés à l'intérieur d'une cavité laser ou à l'aide d'un hologramme ou d'une plaque de phase, comme suggéré par Zhang ou à l'aide de cristaux coniques ou uniaxes comme le suggère l'inventeur.

On peut utiliser la diffraction conique pour changer et mettre en forme la PSF de sorte qu'elle présente des variations latérales et axiales. Après le cristal, le faisceau incident est transformé en deux faisceaux de Bessel : une partie $B_0$ (mode fondamental) et une partie $B_1$ (mode vortex). Tous les faisceaux incidents à polarisation homogène peuvent se décomposer sur la base orthogonale composée des polarisations circulaire droite et circulaire gauche. Le faisceau sortant est la somme des contributions des deux composantes, l'une donnant lieu à une partie $B_0$ et l'autre à une partie $B_1$. Différentes combinaisons de $B_0$ et $B_1$ peuvent être réalisées en choisissant les polarisations en entrée et sortie, ce qui permet d'obtenir des PSF de différentes formes. Nous sommes en particulier intéressés au cas où la polarisation d'entrée et la polarisation de sortie sont elliptiques avec une orientation des grands axes de chaque ellipse ayant un angle de 90° entre eux. Parmi les distributions générées dans ces conditions, certaines présentent d'importante variation selon l'axe Z, et ces variations peuvent être exploitées pour mesurer la position d'un émetteur avec une grande précision axiale. Nous séparons ces distributions en deux groupes, les distributions qui présentent un seul lobe et celles présentant deux lobes. Les distributions avec un seul lobe présentent un effet de rotation selon l'axe Z. Ainsi, les distributions Stokes, réalisées à partir d'une polarisation linéaire (ellipticité =0°) et une polarisation circulaire (ellipticité = 45°) présentent des variations qui apparaissent dans le tableau ci-dessous. En utilisant un algorithme approprié, l'orientation de la distribution peut être détectée et la position de l'émetteur déduite avec une grande précision axiale. (figure 7d). Les distributions avec deux lobes présentent un effet de décalage des deux lobes selon l'axe Z. Ainsi, les distributions dites demi-lunes décalées, réalisées à partir de deux polarisation elliptique orientées à 90° mais avec la même ellipticité présentent des variations qui apparaissent dans le tableau ci-dessous. En utilisant un algorithme approprié, la position de l'émetteur peut être déduite avec une grande précision axiale. (figure 7d)

Toute ces variantes sont réputées faire partie de l'invention. L'inventeur a pourtant choisi, dans certaines implémentations de séparer en deux modules optiques disjoints mais complémentaires les mesures latérales des mesures longitudinales pour réduire la complexité de chacun des modules complémentaires.

**Effets vectoriels**

La théorie développée jusqu'à présent décrit la distribution de lumière dans le plan d'imagerie du microscope, 35. La répartition de la lumière projetée sur l'échantillon est, selon la théorie de l'imagerie géométrique, une image réduite de la distribution de la lumière dans le plan image.

Toutefois, comme il est décrit abondamment dans la littérature, pour un objectif à forte ouverture numérique, la théorie de l'imagerie géométrique n'est pas exacte et les effets vectoriels, doivent être pris en compte. Ces effets consistent essentiellement en la présence d'une composante polarisée longitudinalement.

En référence de nouveau à la Figure 6a, pour atténuer les effets vectoriels, il peut être avantageux de maintenir l'analyseur final fixe et d'ajouter un élément supplémentaire, fixe ou variable, le sous-module d'adaptation de polarisation de sortie, 74, pour contrôler la polarisation de sortie. Nous avons constaté que la polarisation de sortie ayant une symétrie circulaire réduit sensiblement les effets vectoriels. Une telle polarisation peut être circulaire, radial ou azimutale. Pour la polarisation circulaire, le sous-module d'adaptation de polarisation de sortie 74, est tout simplement une lame de retard d'un quatre d'onde. Dans ce cas, les éléments de polarisation longitudinale ont une symétrie de vortex et se fondent harmonieusement dans le système avec seulement une petite modification de la forme des paramètres de Stokes, même pour les objectifs de microscope avec une ouverture numérique très élevé.

Alternativement, le sous-module d'adaptation de polarisation de sortie, 74, peut être variable et s'adapter à la topologie et à la symétrie de chacune des distributions lumineuses compactes.

On rappelle qu'on peut utiliser un prisme de Wollaston pour séparer un faisceau incident en deux faisceaux émergeants séparés par un angle. En utilisant plusieurs prismes en cascade, ou peut ainsi séparer un faisceau incident en un grand nombre de faisceaux émergents. On peut obtenir le même effet en modifiant le prisme de Wollaston, pour créer le **prisme de Wollaston composé,** en lui ajoutant des pièces de cristal uniaxe dont l'indice et l'orientation de la biréfringence sont choisis. On peut ainsi construire un prisme d'un seul bloc de cristal uniaxe qui peut séparer un faisceau incident en $2^n$ faisceaux émergents (par exemple huit ou seize)qui sont contenus dans un plan, et séparé par des angles égaux. Une fois focalisés sur l'échantillon, on obtient $2^n$ points alignés et également séparés. Si le faisceau incident a traversé un module LatSRC ces $2^n$ points ne sont pas $2^n$ tâches d'Airy, mais les distributions crées par le module et sont toutes identiques. L'avantage d'utiliser ce beamsplitter est de balayer l'échantillon plus rapidement puisqu'on a $2^n$ points lumineux à la place d'un seul.

**Méthode PDOS et mesures latérales**

La Méthode PDOS a été conçue au départ pour permettre une superrésolution longitudinale ; toutefois la méthode PDOS peut aussi être utilisée pour obtenir la position latérale d'un nanoémetteur. En effet, les distributions lumineuses élémentaires sont sensibles aussi à une variation de la position latérale du nanoémetteur. Pour un échantillon plan, dans le cas où la projection de lumière n'est pas réalisable, la méthode PDOS peut remplacer la méthode PSIT pour réaliser des mesures superrésolues.

Toute ces variantes sont réputées faire partie de l'invention. L'inventeur a pourtant choisi, dans une des implémentations de séparer en deux modules optiques disjoints mais complémentaires les mesures latérales des mesures longitudinales pour réduire la complexité de chacun des modules complémentaires.

*Module de détection*

En microscopie confocale à balayage le détecteur est un détecteur constitué d'un seul élément comme un PMT ou un SPAD. Le temps d'acquisition du détecteur est déterminé par le mécanisme de balayage.

Un module de détection amélioré, 65, peut être mis en œuvre en utilisant des détecteurs de petite taille à faible nombre de pixels. Un tel module n'aurait pas été réalisable il y a dix ou vingt ans, en raison de l'absence de technologies adéquates. Aujourd'hui, les détecteurs de petite taille à faible nombre de pixels, à cadence élevée, avec des caractéristiques de faible bruit, sont disponibles sur la base de plusieurs technologies. Des matrices de SPAD avec un faible nombre de pixels, comme 32 * 32, ont été démontré récemment avec des taux d'acquisition jusqu'à 1 MHz. Le module détecteur amélioré, 65, peut également être mis en œuvre à l'aide de CCD, EMCCD ou capteurs CMOS. Des capteurs CCD, CMOS ou EMCCD avec un faible nombre de pixels existent ou peuvent être conçus spécifiquement. En outre, les détecteurs CCD, CMOS EMCCD peuvent être utilisés en utilisant des fonctionnalités de région d'intérêt, de sous-fenêtrage ou de «binning», des modes « crop » ou « fast kinetics », disponibles pour certains détecteurs.

Les informations spatio-temporelles référencées ici sont la position et le temps de l'impact de chaque photon fluorescent. Dans les systèmes réels, l'information spatio-temporelle est corrompue par le bruit du détecteur, ce qui crée des photons erronés, et par l'inefficacité de détection, ce qui crée des photons qui ne sont pas détectés, réduisant les performances. Dans les matrices de SPAD, pour chaque photon, le pixel qui l'a détecté et le temps d'impact sont reçus, à savoir l'information spatio-temporelle complète est disponible. Pour des détecteurs CCD, CMOS ou EMCCD, l'acquisition de plusieurs trames est nécessaire pour approximer l'information spatio-temporelle.

Dans plusieurs implémentations nous ferons référence à des détecteurs séparés; dans de très nombreux cas les détecteurs pourront être soit physiquement séparés soit consistant en des zones différentes sur un même détecteur, soit une combinaison des deux cas précédents.

**Algorithmique SRCDA**

L'algorithmique de reconstruction que nous avons détaillée s'applique non seulement dans le cas d'un champ donné analysé à l'aide des méthodes PSIT et PDOS, mais également dans le cas d'un champ de plus grande dimension analysé par balayage. Dans le cas d'un balayage, le modèle direct est enrichi par le fait qu'un recouvrement entre les différentes positions des signaux projetés permet de prendre en compte, en un point donné, plus de mesures. La prise en compte de signaux projetés décalés n'apporte néanmoins aucune complexité supplémentaire, puisque ces signaux décalés ne font que s'ajouter à la liste des signaux projetés.

**Système multi-images incluant l'algorithme de reconstruction E-LSE**

Nous référencerons sous le nom de système multi-images, l'ensemble des systèmes optiques et optoélectroniques, dans lequel un ensemble d'images différentes et différenciées, issues de la même région spatiale de l'objet, bidimensionnelle ou tridimensionnelle - sont enregistrées et analysées à travers un algorithme adéquat pour analyser la distribution spatiale - et/ou spectrale - de la région spatiale émettrice. Cette différentiation peut être due à la projection d'illumination spatialement différentes, tel que décrit précédemment ; elle peut aussi être due à une variation du contenu spectral de l'illumination; elle peut aussi être due à un mouvement naturel ou imposé de l'extérieur des objets. Enfin elle peut être due à une variation stochastique du contenu de la région spatiale de l'objet, bidimensionnelle ou tridimensionnelle, à travers un effet stochastique naturel ou imposé, tel que les systèmes utilisés dans la super-résolution basée sur la détection stochastique, incluant les processus PALM et STORM et leurs innombrables variantes, portant chacune un acronyme différent.

D'autres moyens de différentiation des images de la même région spatiale émettrice sont connus de l'Homme de l'Art et sont réputées partie intégrante de cette invention.

Nous référencerons sous le nom de système multi-images incluant l'algorithme de reconstruction E-LSE, un système multi-images utilisant l'algorithme E-LSE décrit ci-dessous

**Algorithme de reconstruction E-LSE**

L'algorithme proposé permet, à partir des images enregistrées par la caméra (ou les caméras) suite à l'excitation de l'échantillon par l'ensemble des illuminations choisies, de reconstruire une image à haute résolution, bidimensionnelle ou tridimensionnelle, de l'échantillon. Cet algorithme repose sur la combinaison de plusieurs principes:

1) la formulation de la reconstruction comme un problème inverse bayésien qui conduit à la définition d'une distribution a posteriori. Cette loi a posteriori combine, grâce à la loi de Bayes, la formulation probabiliste du modèle de bruit (bruit de Poisson inhérent à la nature quantique de l'émission de photons, auquel vient éventuellement se superposer la modélisation des autres sources de bruits, notamment le bruit de lecture de la caméra), ainsi que d'éventuels aprioris (positivité, régularité, etc.) sur la distribution de lumière dans l'échantillon;

2) l'estimation de la distribution de lumière dans l'échantillon par la moyenne (espérance mathématique) de la distribution a posteriori. Cette approche, envisagée par Besag en 1984 [30], a été récemment mise en oeuvre numériquement dans le cas du débruitage d'image avec un apriori de type variation totale [31,32];

3) l'utilisation de nuées d'émetteurs ponctuels qui permet de favoriser les solutions parcimonieuses (échantillons à nombre limité d'émetteurs, ou dont les émetteurs sont concentrés sur des structures de petite dimension comme des courbes, ou des surfaces dans le cas tridimensionnel;

4) l'estimation de la moyenne a posteriori au moyen d'un algorithme de type Monte-Carlo Markov Chain (MCMC) [33,34], comme dans les références [31,32] mentionnées plus haut.

Selon un mode de réalisation de l'algorithme, le principe 3 n'est pas utilisé et la moyenne de la distribution a posteriori est calculée sur l'ensemble des images possibles comme dans [31,32].

L'algorithme utilise en entrée les mesures effectuées sur l'échantillon, mais également des données inhérentes au système qui sont obtenues après une étape dite de calibration. Dans cette étape, des mesures sont effectuées sur un échantillon de référence afin de mesurer précisément les fonctions d'illumination et la tache optique (*Point Spread Function*) de retour du système optique.

Dans le mode de réalisation standard, où seul le bruit de Poisson est modélisé, la densité de la loi de probabilité a posteriori s'écrit sous la forme

$$p(x, \lambda) = \frac{1}{Z} e^{-E(x, \lambda)}$$

où Z est une constante de normalisation qui n'intervient pas dans l'algorithme, et

$$E(x, \lambda) = \sum_{i, y} \left\{ \sum_k \lambda_k u_i(x_k, y) - m_i(y) \log \left( B + \sum_k \lambda_k u_i(x_k, y) \right) \right\}$$

La nuée d'émetteurs est ici représentée par le vecteurs $x=(x_1, x_2, .., x_n)$ (n positions discrètes dans le domaine de l'image haute résolution à reconstruire) et le vecteur $\lambda=(\lambda_1, \lambda_2, ... \lambda_n)$ qui code les intensités des émetteurs situés aux points $x_1, x_2, ... x_n$. Chaque quantité de type $u_i(x, y)$ est déterminée lors de l'étape de calibration : elle représente l'intensité émise au pixel y de la caméra par un émetteur situé au pixel x de l'image haute résolution, en réponse à une illumination d'indice *i* (*i* code donc ici à la fois la position du signal d'illumination, mais aussi sa forme). Le réel positif B correspond à l'intensité du fond continu, qui résulte en général à la fois de l'échantillon (fluorescence diffuse par exemple) mais aussi du capteur. Enfin, les quantités $m_i(y)$ correspondent simplement aux mesures (images enregistrées par la caméra) : $m_i(y)$ est l'intensité mesurée au pixel y de l'image d'indice *i*, c'est-à-dire l'image enregistrée après illumination d'indice *i*).

L'algorithme proposé consiste à faire évoluer les émetteurs représentés par les vecteurs x et $\lambda$ en accord avec la loi donnée par la densité $p(x, \lambda)$. L'algorithme est itératif: à chaque itération, l'un des émetteurs est perturbé (en position ou en intensité) et cette perturbation est acceptée ou non selon le principe de l'algorithme de Metropolis-Hastings [3]. L'image reconstruite est obtenue en moyennant, avec un poids égal pour chaque itération, les émetteurs ainsi construits. Si $x^j$ et $\lambda^j$ correspondent respectivement à la position et à l'intensité des émetteurs à l'itération *j* de l'algorithme, alors l'image I reconstruite après N itérations est donnée par

$$I(x) = \frac{1}{N} \sum_{j, k : x_k^j = x} \lambda_k^j$$

Plusieurs améliorations peuvent être apportées à cet algorithme: l'instauration d'une étape de *burn-in* (les premières itérations ne sont pas utilisées dans la reconstruction), l'optimisation de l'initialisation des émetteurs, l'optimisation des perturbations effectuées à chaque itération (loi de proposition), l'utilisation d'une étape de post-filtrage (par exemple un léger flou gaussien), etc.

Les résultats de l'algorithme peuvent être transmis à l'utilisateur soit sous forme d'une image soit sous forme de données numériques ou graphiques.

Le même algorithme de reconstruction, peut être utilisé dans une seconde version incluant un ensemble de paramètres supplémentaires décrivant des paramètres globaux de région spatiale de l'objet soit connus apriori soit déterminés a postériori.

Cet algorithme, dans ses deux versions, peut être utilisé dans l' ensemble des systèmes multi-images, dans lesquels un ensemble d' images différentes et différenciées, issues de la même région spatiale de l' objet, bidimensionnelle ou tridimensionnelle - sont enregistrées et analysées.

### Algorithme du processus optique composé

Le processus optique composé selon au moins un mode de réalisation de l'invention est un complément logique de l'algorithme SRCDA. En effet, la reconstruction obtenue par l'algorithme SRCDA peut mener à la conclusion qu'une image supplémentaire permettrait d'améliorer les performances de la mesure. La plateforme de microscopie SRCDP permet l'acquisition d'une - ou plusieurs - images complémentaires choisies dans un ensemble de distributions lumineuses des méthodes PSIT ou PDOS.

Un exemple est explicité ultérieurement.

### Mesure de position d'un point par la méthode PSIT

La méthode PSIT peut être utilisée comme une technique permettant de mesurer la position d'un nanoémetteur avec une haute précision.

Considérons un nanoémetteur positionné à la position x,y en coordonnées cartésiennes et p, θ en coordonnés polaires. Une séquence d'illumination consistant en une onde fondamentale, et un couple de distributions dites « demi-lunes », alignées suivant des axes orthogonaux est projetée sur le nanoémetteur.

La procédure de prétraitement créée deux images :

Une image « top hat » consistant en la somme des trois images de la séquence,
Une image vortex consistant en la somme des deux images demi-lunes.

Un premier descripteur est la position cartésienne calculée à l'aide de l'algorithme du centroide sur l'image « top-hat ».

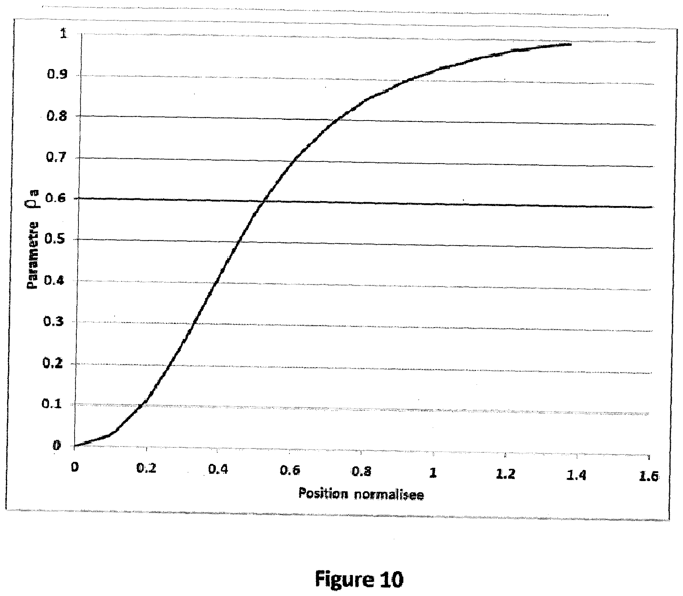

En se référant à la Figure 10, la position radiale $\rho$ peut être mesurée univoquement en mesurant un paramètre, $\rho_a$, égal à l'arc tangente normalisé d'un facteur $\pi$, du rapport d'intensité entre l'intensité normalisée émise par le nanoémetteur illuminé par l'onde vortex, IV, et l'intensité normalisée émise par le nanoémetteur illuminé par l'onde fondamentale, IF. En effet :

- l'intensité normalisée émise par le nanoémetteur illuminé par l'onde fondamentale varie de 1 au centre pour l'onde fondamentale à 0 au rayon d'Airy,

- l'intensité normalisée émise par le nanoémetteur illuminé par l'onde vortex varie de 0 au centre pour à 1 au maximum du vortex pour arriver à 0 pour une valeur légèrement supérieure au rayon d'Airy. L'arc tangente du rapport est une fonction monotone.

La position azimutale peut être mesurée en mesurant le rapport d'intensité entre l'intensité totale émise par le nanoémetteur illuminé par la première distribution demi-lune, $I_H$, et l'intensité totale émise par le nanoémetteur illuminé par la seconde distribution demi-lune, Ive. Le rapport entre ces deux intensités est une loi géométrique en tangente carrée :

$$\frac{I_{VE}}{I_H} = \tan^2 \theta \qquad \text{(EQ. 9)}$$

Les deux mesures sont redondantes. Cette redondance est une mesure permettant de qualifier l'objet observé comme étant un point unique et de séparer ce cas des autres objets potentiellement présents sur l'échantillon.

Une application directe de l'utilisation de la méthode PSIT selon un mode de réalisation de l'invention pour mesurer la position d'un nanoémetteur avec une haute précision est l'intégration de cette technique de mesure dans une technique nouvelle de reconstruction optique stochastique locale. Une des limites de l'applicativité des techniques stochastiques est le processus de mesure, nécessitant un nombre important d'images et donc un temps de mesure long et une forte phototoxicité. L'utilisation de la technique PSIT selon au moins un mode de réalisation de l'invention, qui permet de mesurer la position d'un émetteur lumineux, à une résolution bien supérieure au disque d'Airy, à des cadences pouvant atteindre les micro ou nanosecondes permet l'extension des techniques stochastiques à de nombreuses applications nouvelles.

Les images résultantes de l'utilisation de la méthode PSIT peuvent aussi être traitées en utilisant la méthode de Hough généralisée, permettant de reconnaitre des objets structurés, ligne, cercle ou autres, dans une image.

La diffraction conique pourrait permettre de mettre en application toute une famille de techniques de super résolution ou super localisation, la localisation d'une seule molécule. On se réfère maintenant à la figure 8, qui illustre schématiquement une technique originale que nous avons nommée « DarkTracking ».

En nous référant à la figure 8, 80 représente la phase d'initialisation c'est-à-dire la détection de l'émetteur en utilisant un scanner confocal ou tout autre méthode optique connue. 81 représente la phase de positionnement du faisceau vortex sur l'émetteur ; 82 représente, le cas où l'émetteur bouge par rapport au centre du vortex et est excité par une fraction du faisceau créant une fluorescence qui peut être détectée ; 83 représente le repositionnement de l'émetteur au centre du faisceau vortex tel qu'aucune fluorescence n'est créée et détectée (position enregistrée Xi,Yi) et 84 correspond à une boucle de rétroaction dans laquelle un système indépendant de localisation repositionne l'élément suivi à une position corrigée.

Les distributions lumineuses utilisées par cette technique sont des vortex générés par diffraction conique. Toutefois cette technique peut utiliser d'autres vortex ou autres distributions généré par la diffraction conique. Nous supposons que la molécule qui nous intéresse a été marquée par un ou plusieurs fluorophores qui peut être excité à $\lambda$. La position de la molécule est tout d'abord détectée par une image confocale classique à $\lambda$. La position du scanner est ensuite ajustée pour stimuler l'échantillon de telle sorte que le centre du vortex coïncide exactement avec la position de l'émetteur. Le signal en fluorescence est détecté par une caméra très sensible (ex. EMCCD ou sCMOS), ou PMT, permettant une détection du signal de faible amplitude de l'émetteur grâce à une efficacité quantique importante. Le processus de localisation repose sur l'absence de signal fluorescent quand l'émetteur se situe exactement au centre du vortex. Le fait que le gradient d'intensité soit important à proximité du centre du vortex permet une localisation précise de l'émetteur. Si l'émetteur bouge légèrement, l'intensité qu'il absorbe ne sera plus nulle, et il émettra un signal en fluorescence dont la position et l'intensité sont déduites de l'image. Une boucle de rétroaction permet alors de recentrer le vortex sur l'émetteur et de mémoriser la position de l'émetteur. La boucle de rétroaction peut être exécutée à la vitesse d'exécution de la caméra (jusqu'à 1kHz) ou le détecteur (plusieurs MHz), ce qui permet de faire du suivi d'une molécule en temps réel et sur une période de temps conséquente. Comme nous essayons toujours de minimiser le signal émis en fluorescence en minimisant le signal excitant l'émetteur, la localisation peut être conduite sur une longue durée de temps, le bleaching étant moins susceptible de se produire avec de si petites doses de lumière. La précision de la localisation dépend fortement du rapport signal sur bruit de l'image, par conséquent le bruit de fond (bruit de la caméra et signal en autofluorescence) doit être pris en compte. Supposons à présent que l'échantillon soit marqué par deux fluorophores différents qui peuvent être excités à deux longueurs d'onde différentes, $\lambda_1$ et $\lambda_2$. Nous faisons se propager ensemble deux faisceaux avec des topologies différentes qui dépendent de leur longueur d'onde. Le premier ($\lambda_1$) a une forme classique de Gaussien et permet d'obtenir une image confocale globale de l'échantillon. La deuxième ($\lambda_2$) est un faisceau vortex utilisé pour le DarkTracking. En contrôlant le miroir galvo qui scanne l'échantillon, le dark-tracking peut être réalisé à chaque fois qu'une ligne pour l'image caméra est scannée, de sorte que la position de l'émetteur est suivie à une fréquence beaucoup plus haute que le nombre d'image par seconde. Les principaux avantages de cette technique, comparée à d'autre technique de suivi de molécule unique, sont l'utilisation d'un unique système de scan et la puissance envoyée aux molécules suivies est extrêmement faible. En pratique, l'utilisation, l'alignement et la mise en forme de ces deux faisceaux n'est pas une tâche triviale si l'on utilise les techniques conventionnelles de mise en forme de faisceau, telles que des hologrammes générés par ordinateurs, modulateurs spatiaux ou des lames d'onde en spirale, principalement à cause de leur chromaticité inhérente. La diffraction conique peut être utilisée pour simplifier le montage. En utilisant les optiques adaptées, un cristal peut être adapté pour générer un vortex à une longueur d'onde, et un faisceau gaussien à une autre longueur d'onde suivant le même chemin optique. Cela permet d'utiliser un simple chemin optique partant d'une fibre qui résout de nombreux problèmes pratiques. La technologie dark-tracking peut être facilement utilisée pour étudier nombre de question biologique dans lesquelles les techniques conventionnelles de suivi de la position d'une particule sont pénalisées par le bleaching des particules.

Le Dark tracking a été décrit ci-dessus dans le cas de l'utilisation d'un vortex. Toutefois, de nombreuses variantes, utilisant une ou plusieurs distributions, par exemple mais non limites aux demi-lunes ou aux vecteurs de Stokes, soit toute distribution possédant un zéro d'intensité et un gradient - si possible le plus fort possible - en fonction d'une des dimensions spatiales peut permettre la réalisation du Dark Tracking et sont réputées partie de cette invention. Les capacités de la diffraction conique de créer de nombreuses distributions lumineuses différentes en font un outil de choix pour la réalisation du Dark Tracking.

***Reconnaissance et mesure de deux points : un nouveau critère de résolution***

Considérons maintenant deux nanoémetteurs de même intensité positionnés symétriquement autour du centre aux positions p, $\theta$ et p, -$\theta$ en coordonnés polaires. Nous utiliserons le système décrit dans les paragraphes précédents. Les trois descripteurs donneront les résultats suivants :

- Le centroïde mesurera le centre de gravité de la distribution lumineuse, qui sera à l'origine,
- Le descripteur p, mesurera la valeur radiale commune des deux nanoémetteurs,
- le descripteur $\theta$, qui dans le cas des demi-lunes contient une dégénérescence entre $\theta$ et -$\theta$, mesurera la valeur $\theta$.

Comme cité précédemment si la valeur du descripteur $\rho$ n'est pas nulle nous savons que le cas étudié n'est pas un point mais deux ou plus. De plus, les descripteurs $\rho$ et $\theta$ nous permettent de mesurer les caractéristiques de deux points à une résolution très supérieure à celle définie par le critère de Rayleigh. Qui plus est, en utilisant un processus composé, il est possible de séparer ce cas de la grande majorité des cas de 3 points et plus. Une distribution lumineuse supplémentaire peut être projetée sur l'échantillon, une demi-lune inclinée d'un angle $\theta$; l'hypothèse de la présence de deux points sera confortée ou infirmée en fonction des résultats de cette image. En effet, l'énergie mesurée ne sera nulle que pour deux points, pour une ligne ou pour une série de points alignés dans la direction de l'angle $\theta$.
Cette mesure n'est pas limitée à priori. Bien sûr, une limite de résolution pratique existe d'abord, liée à la qualité du signal, les fluctuations et imperfections diverses. Si on néglige les limites pratiques, la limite de résolution est liée au nombre de photons détectés.

***Modalités STED***

On se réfère maintenant à la figure 6b, qui est une illustration schématique simplifiée d'un module optique LatSRCS modifié, achromatique ou non, 700. Ce module diffère de l'implémentation d'un module optique LatSRCS, 700, décrit précédemment et représenté dans la Figure 6a, par l'ajout de plusieurs éléments avant le module :

- des lasers, 79a, 79b et 79c, optionnellement à des longueurs d'ondes différentes,
- des fibres optiques, 78a, 78b et 78c, issues des lasers 79a, 79b et 79c,
- optionnellement, des sous-modules de contrôle de polarisation, 77a, 77b et 77c, pour modifier statiquement ou dynamiquement la polarisation des lasers, 79a, 79b et 79c, les sous-modules de contrôle de polarisation pouvant être positionnés avant ou après la fibre; Toutefois, dans certaines implémentations, par exemple utilisant des fibres PM, « polarization maintaining » en anglais, les sous-modules de contrôle de polarisation 77a, 77b et 77c peuvent ne pas être nécessaires et la polarisation de la lumière issue de la fibre est déterminée par la position relative du laser et de la fibre,
- un « laser combiner » (en anglais), 76a, combinant deux ou plusieurs source lasers optionnellement à travers des fibres optiques, 78a, 78b et 78c, en une fibre de sortie commune, 76b,
- un élément optique, 75, permettant de transformer la lumière issue de la fibre en lumière collimatée susceptible d'être utilisée par le reste du module LatSRCS, 700, de manière similaire à celle décrite précédemment.

De nombreuses variations de ce dispositif, connues de l'Homme de l'Art, peuvent être ajouté à ce schéma et sont revendiquées dans cette invention: par exemple, les deux éléments optiques 31 et 75 peuvent être intégrées en un seul élément, ou même enlevées si les paramètres de sortie de la fibre commune sont adéquats. De même, la fibre commune, 76b, peut ne pas être nécessaire pour certaines implémentations. De plus,
**[0283]** L'introduction, à travers une fibre optique commune, ou directement en lumière se propageant dans l'espace, de deux, ou plus, longueurs d'ondes ayant des polarisations différentes, permet de créer une méthode et/ou un dispositif apte à réaliser les techniques RESOLFT ou STED dans toutes leurs différentes modalités. Dans cette méthode et/ou dispositif les ondes d'excitation et de déplétion se propagent suivant un chemin commun et le module LatSRCS, 700, peut être totalement achromatique, ou non dans une version simplifiée, tel que décrit précédemment.
Dans la variante la plus simple de cette méthode, les ondes d'excitation et de déplétion se propagent suivant deux polarisation linéaires orthogonales et une lame quart d'onde - optionnellement achromatique - est positionnée à l'entrée du système pour transformer ces polarisations en polarisations circulaires orthogonales pour obtenir, pour l'une une onde fondamentale et pour l'autre un vortex.
On se réfère maintenant de nouveau à la figure 6b. Les sous-modules de contrôle de polarisation, 77a, 77b et 77c, peuvent être actionnés pour créer, simultanément, des séquences de distributions lumineuses, identiques ou différentes, pour la voie d'excitation et la voie de déplétion. De plus, l'intensité des lasers peut être modulée, créant un chronogramme complexe de l'intensité de chaque laser, de la séquence de distribution lumineuses d'excitation et de la séquence de distributions lumineuses de déplétion.

Dans l'implémentation préférée, en utilisant un microscope confocal et un module LatSRCS original ou modifié, achromatique ou non, on projette séquentiellement :

En premier lieu, une distribution d'Airy ou un fondamental en excitation simultanément avec un vortex de déplétion. L'image d'émission résultante sera appelée l'image positive,

En deuxième étape, un vortex d'excitation, simultanément avec un vortex de déplétion. L'image d'émission résultante sera appelée l'image négative.

Dans une variante du premier lieu on projette uniquement une distribution d'Airy ou un fondamental en excitation

L'image différence, consistant en la soustraction pondérée de ces deux images. Cette image différence, si on choisit les bons paramètres, aura une taille - en termes de PSF - plus fine qu'un STED classique, tout en ne nécessitant qu'une intensité de déplétion relativement faible. En effet, le but de la déplétion du vortex ne sera plus de réduire la taille d'une tache d'Airy, nécessitant ainsi une énergie importante, comme dans le STED ou RESOLFT classique, mais de réduire l'excès d'énergie présent dans le vortex d'excitation par rapport à la distribution d'Airy ou au fondamental. De plus, la déplétion du Airy ou du fondamental, se couplera avec la soustraction de l'image négative, créée par le vortex d'excitation, ce qui est équivalent à la soustraction mathématique des deux illuminations. La réduction de la taille de la PSF résultante sera la conjugaison de ces deux effets.

De plus, ce mode de réalisation préféré peut, dans certains cas s'affranchir de la nécessité de déclencher l'excitation comme nécessaire dans le « Gated STED ». En effet, les photons arrivés avant l'application complète de la déplétion, peuvent être pris en compte par un choix adéquat de paramètres, sans nécessiter l'adjonction d'un système complexe et contraignant. Finalement, la nécessité de moduler le STED, « ModSted » peut aussi être évitée car les photons d'émission émis par le vortex de déplétion ne diffèrent à peu près pas de ceux émis par le vortex d'excitation et peuvent aussi être compensés. Dans un deuxième mode de réalisation, en utilisant un microscope confocal et un module LatSRCS original ou modifié, on projette simultanément une séquence de faisceaux d'excitation, une séquence de faisceaux de déplétion, les deux séquences de faisceaux pouvant différer par leur polarisation, créant des distributions lumineuses de topologies différentes. Ce dispositif permet, de réaliser une séquence de distributions lumineuses de tailles inférieures à celles qui auraient été obtenues sans le faisceau de déplétion. L'algorithmique SRCDA, sera utilisé dans cette implémentation pour déterminer la distribution spatiale ou la position d'émetteurs ponctuels. Dans un autre mode de réalisation, en utilisant un microscope confocal et un module LatSRCS original ou modifié, on projette simultanément un faisceau d'excitation, sous forme d'un Airy et un faisceau de déplétion sous forme d'un vortex, les deux faisceaux différant par leur polarisation. Ce dispositif permet, sans éléments dynamiques, de réaliser un dispositif STED totalement achromatique.

Dans un autre mode de réalisation non revendiqué, en utilisant un microscope confocal, un module LatSRCS original ou modifié, et un module LongSRCS, on projette simultanément une séquence de faisceaux d'excitation, une séquence de faisceaux de déplétion, les deux séquences de faisceaux pouvant différer par leur polarisation, créant des distributions lumineuses de topologies différentes. Le module LatSRCS permet de réaliser une séquence de distributions lumineuses de tailles inférieures à celles qui auraient été obtenues sans le faisceau de déplétion. Le module LongSRCS implémente la méthode PDOS de façon à séparer sur des détecteurs différents la lumière collimatée, émergente de nanoémetteurs positionnés au plan focal de l'objectif, de la lumière non-collimatée émergente de nanoémetteurs se trouvant en-deçà ou au-delà du plan focal. La méthode PDOS, dans cette implémentation, permet d'acquérir une information essentiellement longitudinale, c'est-à-dire la position longitudinale de chacun des nanoémetteurs, complémentaire de l'information latérale obtenue à l'aide du module LatSRCS original ou modifié. L'algorithmique SRCDA, sera utilisé dans cette implémentation pour déterminer la distribution spatiale ou la position d'émetteurs ponctuels.

Dans un autre mode de réalisation non revendiqué utilisant une des implémentations décrites antérieurement et utilisant un cristal biaxe pour créer le beam shaping, on utilise un élément dynamique de polarisation avant ou après le cristal biaxe pour corriger le mouvement dynamique de la pupille, qui dans certains cas peut être créée au cours du balayage optique du microscope confocal. Cet effet de mouvement de la pupille étant dans certaines implémentations des technologues STED une des limites des performances, sans nécessiter d'un système de balayage supplémentaire. [35]

Dans un autre mode de réalisation non revendiqué utilisant un microscope confocal, on projette à l'aide d'un module LatSRCS original ou modifié, deux ou plusieurs distributions lumineuses localisées à différentes longueurs d'onde. La première distribution lumineuse permet de rendre la scène parcimonieuse, c'est-à-dire d'isoler des émetteurs à l'aide d'un effet physique, qui dilue la densité des émetteurs capable d'émettre de la fluorescence, de façon à créer des régions dans lesquelles l'hypothèse de parcimonie est valable c'est-à-dire la présence d'un émetteur isolé ou d'un petit nombre d'émetteurs. Les effets physiques qui permettront de réaliser cette parcimonie seront les mêmes ou seront des effets dérivés, des effets utilisés pour créer la parcimonie pour les techniques de microscopie de localisation d'émetteurs uniques. Ces techniques comprennent par exemple les techniques PALM STORM, DSTORM, FPALM et autres. La deuxième distribution lumineuse à une autre longueur d'onde créera une fluorescence dont l'intensité sera variable dans le temps. Cette deuxième distribution lumineuse utilisera une des techniques PSIT, soit une séquence de distributions discrètes, soit une séquence de distributions continues. Dans le cas de distributions discrètes, la lumière sera détectée soit par un détecteur matriciel, soit par un détecteur unique. Dans le cas de la distribution continue, bien qu'il soit aussi possible d'utiliser un détecteur matriciel, l'implémentation la plus probable sera l'utilisation d'un détecteur unique ; dans ce cas l'information latérale de position xy et potentiellement l'information de distribution longitudinale z pourra être obtenue par des rapports d'intensités. Un des cas les plus intéressants est le cas de distributions harmoniques en temps dans lesquelles les cellules électrooptiques sont actionnées par un voltage sinusoïdal. Dans ce cas, la position xy peut être retrouvée à l'aide d'une mesure des harmoniques temporels du signal mesuré par le détecteur, qui peut être un détecteur unique, qui contiennent indirectement les informations de position latérale.

De nombreuses autres implémentations de cette méthode générale seront claires à l'Homme de l'Art, par exemple:

- Certaines des distributions créées par le module LatSRCS, 700, sont des superoscillations, Dans la Figure 7b, les cas sous figures $7b_{00}$ et $7b_{11}$ sont des superoscillations. Il consiste en un spot naturellement petit, entouré d'un anneau large et intense. En projetant un anneau de déplétion sur cette superoscillation, il sera possible d'empêcher, à un cout énergétique faible, les fluorophores contenu dans l'anneau d'émettre et la taille du spot sera la taille du spot central de la superoscillation

- La création successivement ou simultanément de deux - ou plus - distributions lumineuses en déplétion peut remplacer avantageusement le vortex de déplétion dans toutes les modalités RELSOFT ou STED. Un des effets possible est l'amélioration de la forme de la distribution lumineuse de déplétion en prenant en compte les effets vectoriels. Il est aussi possible de créer un nombre plus grand que 2 de distributions dites en « demi-lunes», pour explorer différents états de polarisation.

### Module de contrôle

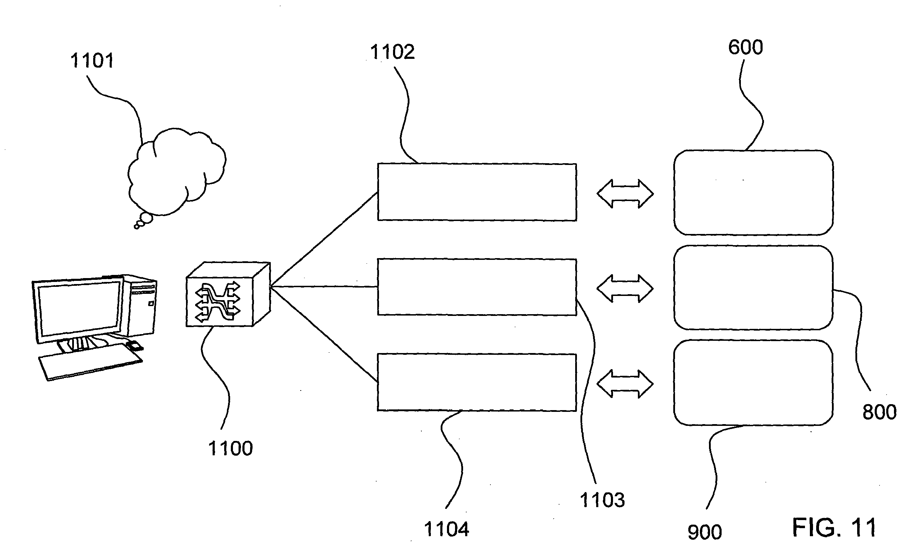

En référence à la Figure 11 et à la Figure 5, dans un mode de réalisation préféré de cette invention, les différents éléments de contrôle intégrés dans la plateforme SRCDP, 500 seront décrits :
Le Module de contrôle, 1 100, à l'aide de la procédure systémique de contrôle, 1101, contrôle et modifie les paramètres optiques de la plateforme SRCDP, 500, les paramètres électroniques de l'ensemble de détection amélioré, 65, et les paramètres mathématiques des procédures algorithmiques SRCDA, 900, pour optimiser l'information émergente, suivant des critères définis par le système ou par l'utilisateur. Le contrôle est réalisé en faisant varier les systèmes de contrôle 1102, 1103 et 1104, des différents éléments de la plateforme, 600, 800 et 900. Le système de contrôle, 1100, utilisera aussi, si elles sont disponibles des informations externes, 1105, relayées par le support informatique. Remarque : 1105 n'est pas présent sur la Figure 11

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir du champ de cette invention

### Implémentations alternatives

Les modes de réalisation de l'invention décrits peuvent être intégrés sur un microscope confocal de fluorescence. Le système de superrésolution selon des modes de réalisation de l'invention consiste en une nouvelle modalité de mesure, en complément ou en remplacement des modalités existantes de la microscopie. Toutefois, le système de superrésolution selon des modes de réalisation de l'invention peut tout aussi bien être intégré sur les autres plateformes de microscopie. Ces plateformes de microscopie, décrites par exemple en comprennent mais ne sont pas limité aux: microscopes à champ large, « Wide field microscope », microscopes à champ obscur, « dark field microscope », les microscopes de polarisation, les microscopes à différence de phase, les microscopes à interférence différentiel de contraste, les microscopes stéréoscopiques, les microscopes Raman, les microscopes dédiés à une tache spécifique, comme le « live cell imaging », le « cell sorting », « cell motility » ou tout autre instrument de microscopie optique.

Dans un autre mode de réalisation non revendiqué, la plateforme de microscope qui a été décrite est couplée à un système de microscopie électronique (CLEM- Correlative Light Electron Microscopy), ou tout autre système similaire tel que le TEM (Transmission Electron Microscopy), ou l'EBM (Electron Beam Microscopy), ou la SEM (Scanning Electron Microscopy)

Dans un autre mode de réalisation de l'invention non revendiqué, la plateforme de microscope est une plateforme SRCDP complète, et comporte un module LongSRCS, implémentant la méthode PDOS et utilisant l'algorithmique SRCDA.

Dans un autre mode de réalisation non revendiqué, la plateforme de microscope est une plateforme SRCDP partielle, et utilise l'algorithmique SRCDA.

Dans un autre mode de réalisation non revendiqué, la plateforme de microscope est une plateforme SRCDP partielle, et utilise le module de contrôle.

Dans un autre mode de réalisation non revendiqué, la plateforme de microscope comporte en outre un module LongSRCS, implémentant la méthode PDOS

Quant à une discussion plus approfondie de la manière de l'utilisation et l'exploitation de l'invention, elle devrait ressortir de la description ci-dessus. Par conséquent, aucune discussion relative à la forme de l'utilisation et du fonctionnement ne sera décrite.

À cet égard, avant d'expliquer au moins un mode de réalisation de l'invention dans le détail, il est entendu que l'invention n'est pas limitée dans son application aux détails de la construction et au régime des composantes énoncées dans la description suivante ou illustrées dans le dessin. L'invention est capable d'autres modes de réalisation et peut être pratiquée et effectuée de diverses manières. En outre, il est entendu que la phraséologie et la terminologie employée dans ce document sont dans le but de la description et ne devrait pas être considérée comme limitative.

Les références citées ici enseignent de nombreux principes qui sont applicables à la présente invention. Par conséquent, la totalité du contenu de ces publications sont incorporés ici par référence, le cas échéant pour les enseignements de détails supplémentaires ou de remplacement, les caractéristiques et / ou d'information technique.

L'utilisation avantageuse des fibres optiques est la transmission du mode fondamental, le mode $TEM_{00}$ et seulement lui. Toutefois, certaines configurations de fibres optiques, principalement mais non exclusivement basées sur des fibres dites « Photonic Crystal Fiber » (en anglais) permet la transmission simultanée ou non, de modes plus complexes, y compris des modes de vortex. Il serait donc possible de déporter les distributions optiques créées par la réfraction conique à l'aide de fibres optiques, permettant une simplification majeure du système optique.

De plus, certaines fibres les « dual-core photonic crystal fibers », [16], permettent une interaction entre deux modes, l'un d'entre eux pouvant être un vortex, et fournissent un mécanisme physique supplémentaire pour créer des fonctions de transfert diversifiées.

De nombreuses techniques de superrésolution sont basées sur la mesure de sources ponctuelles, de taille inférieure à une fraction de longueur d'onde. Les techniques de superrésolution selon des modes de réalisation décrits permettent la mesure de sources ponctuelles, mais aussi d'objets structurés, par exemple et principalement des segments de lignes, des cercles ou même d'objets continus. En Biologie, cette extension permettra la mesure d'entités biologiques importantes, telles que des filaments, des neurones et certains microtubules.

Bien que les descriptions des modes de réalisation, pour simplifier la compréhension de l'invention, présentent les applications en Microscopie, plus spécifiquement en Biologie, et encore plus spécifiquement en Biologie de Fluorescence, les applications peuvent être étendues aux applications générales de la Microscopie et à l'ensemble du domaine de la Vision, incluant la Vision artificielle.

Des modes de réalisation de l'invention peuvent être appliqués, en choisissant un système optique différent, à de nombreuses applications médicales, par exemple mais sans se limiter, à l'observation ophtalmologique. Ce champ d'application correspond à la mesure d'objets biologiques ou médicaux de résolution micronique, la résolution étant comprise entre 1 et 10 $\mu$m.

De plus, des modes de réalisation de l'invention peuvent être appliqués, comme expliquée ultérieurement, à travers une fibre optique. Ceci permet de nombreuses applications supplémentaires, par exemple mais sans se limiter, à l'observation gastrique ou gastroentérologique, et à l'observation du colon et des voies urinaires.

Il est entendu que l'invention n'est pas limitée dans son application aux détails énoncés dans la description contenue dans les présentes ou illustrés dans les dessins. L'invention est capable d'autres modes de réalisation et d'être pratiquée et effectuée de diverses manières. L'homme de l'art comprendra aisément que diverses modifications et changements peuvent être appliquées aux modes de réalisation de l'invention tel que décrit précédemment sans sortir de son champ d'application, définie dans et par les revendications annexées.

**Références**

1. L. Schermelleh, R. Heintzmann, and H. Leonhardt, "A guide to super-resolution fluorescence microscopy," The Journal of cell biology 190, 165-175 (2010).

2. M. V. Berry, "Conical diffraction asymptotics: fine structure of Poggendorff rings and axial spike," Journal Of Optics A-Pure And Applied Optics 6, 289-300 (2004).

3. http://en.wikipedia.org/wiki/Superresolution

4. J. F. Nye and M. V. Berry, "Dislocations in Wave Trains," Proceedings of the Royal Society of London. Series A, Mathematical and Physical Sciences (1934-1990) 336, 165-190(1974).

5. S. W. Hell and J. Wichmann, "Breaking the diffraction resolution limit by stimulated émission: stimulated-emission-depletion fluorescence microscopy," Optics letters 19, 780-782 (1994).

6. W. R. Hamilton, "Third Supplement to an Essay on the Theory of Systems of Rays." Trans. Royal Irish. Acad., pp 1-144 (1833).

7. H. Llyold, "On the Phenomena presented by Light in its Passage along the Axes of Biaxial Crystals," The London and Edinburgh Philosophical Magazine and Journal of Science ii, 112-120 (1833).

8. C. Phelan, D. O'Dwyer, Y. Rakovich, J. Donegan, and J. Lunney, "Conical diffraction and Bessel beam formation with a high optical quality biaxial crystal," J. Opt. A, Pure Appl. Opt 7, 685-690 (2009).

9. M. Berry and M. Jeffrey, "Conical diffraction: Hamilton's diabolical point at the heart of crystal optics," Progress in Optics 50, 13 (2007).

10. A. Geivandov, I. Kasianova, E. Kharatiyan, A. Lazarev, P. Lazarev, and S. Palto, "Printable Thin Biréfringent Film Retarders for LCD."

11. B. Acharya, A. Primak, T. Dingemans, E. Samulski, and S. Kumar, "The elusive thermotropic biaxial nematic phase in rigid bent-core molecules," Pramana 61, 231-237 (2003).

12. D. H. Goldstein and E. Collett, Polarized light (CRC, 2003), Vol. 83.

13. J. B. Pawley, Handbook of biological confocal microscopy (Springer Verlag,2006).

14. M. Bass, Handbook of optics (McGraw-Hill, 2001).

15. M. Minsky, "Microscopy Apparatus," 3,013,467 (1961).

16. P. Li, J. Zhao, S. Liu, X. Gan, T. Peng, and X. Jiao, "Dynamic behaviors of optical vortices in dual-core photonic crystal fibers," Optics Communications (2012).

17. Stefan Hell et Jan Wichmann "Process and device for optically measuring a point on a sample with high local resolution", brevet américain US 5731588 A,

18. Vicidomini G, Schönle A, Ta H, Han KY, Moneron G, et al. (2013) STED Nanoscopy with Time-Gated Détection: Theoretical and Experimental Aspects. PLoS ONE 8(1)

19. Katrin I. Willig, Lars Kastrup, U. Valentin Nägerl, Stefan W. Hell: "STED Microscopy: Différent Approaches and Applications"

20. Angus John BAIN et Richard John MARSH « Improvements relating to fluorescence microscopy", WO 2013008033 A1, Application number PCT/GB2012/051680, Filing date Jul 13, 2012

21. Christian Eggeling et al. "Sted microscopy with pulsed excitation, continuous stimulation, and gated registration of spontaneously emitted fluorescence light", application WO 2012069076 A1, Application PCT/EP2010/067956, Filing date, Nov 22, 2010

22. Emiliano Ronzitti et al.: "Frequency dépendent détection in a STED microscope using modulated excitation light", Optics Express, Vol. 21, Issue 1, pp. 210-219 (2013)

23. D. Wildanger et. al. " A STED microscope aligned by design", Opt. Exp. 17, 16100-16110 (2009).

24. N. Bokor et al. "Compact fluorescence depletion microscope system using an integrated optical element", Opt. Comm. 281, 1850 (2008).

25. Juergen Hoeffman, « Apparatus for illuminating a specimen and confocal fluorescence scanning microscope », brevet américain US6555826 et « Scanning microscope with a detcctor and light source for exciting an energy state in a specimen and module fora scanning microscope », brevet américain US6958470

26. R. Menon, P. Rogge, and H.-Y. Tsai, "Design of diffractive lenses that generate optical nulls without phase singularities," J. Opt. Soc. Am. A 26(2), 297-304 (2009).

27. M. Reuss et. al. " Biréfringent device converts a standard scanning microscope into a STED microscope that also maps molecular orientation", Opt. Exp. 18, 1049-1058 (2010)

28. http://www.abberior.com/products/productlist/cat/optical-components/prod/easydonut-phaseplate/

29. Y. Zhang, "Génération of three-dimensional dark spots with a perfect light shell with a radially polarized Laguerre-Gaussian beam," Applied optics 49, 6217-6223 (2010).

30. J. Besag, "Towards Bayesian Image Analysis". Journal of Applied Statistics, vol. 16, pp. 395-407, 1989.

31. C. Louchet, L. Moisan, "Total Variation denoising using posterior expectation". Proceedings of the European Signal Processing Conférence (Eusipco), 2008.

32. C. Louchet, L. Moisan, "Posterior Expectation of the Total Variation model: Properties and Experiments". SIAM Journal on Imaging Sciences, vol. 6, n. 4, pp. 2640-2684,2013.

33. L. Tiemey, "Markov Chains for exploring posterior distributions". The Annals of Statistics, vol. 22, n. 4, pp. 1701-1728, 1994.

34. W.K. Hastings, "Monte Carlo Sampling Methods Using Markov Chains and Their Applications". Biometrika, vol. 57, n. 1, pp. 97-109, 1970.

35. Johann Engelhardt, «Procédé et dispositif pour le décalage dynamique d'un faisceau lumineux par rapport à un système optique focalisant le faisceau lumineux », demande PCT WO2010069987 A1

## Revendications

1. Un procédé optique de mesure pour déterminer la distribution spatiale ou la localisation de sources réémettrices sur un échantillon, l'échantillon comportant au moins une source réémettrice ladite au moins une source réémettrice réémettant de la lumière en fonction de la lumière projetée sur l'échantillon, suivant une loi déterminée, par une première source lumineuse comprenant un premier laser, et la source réémettrice pouvant être déplétée ou activée par l'action d'une seconde source lumineuse, comprenant un second laser, le procédé comportant.
l'utilisation des deux lasers (79a), (79b), la longueur d'onde d'un des lasers étant accordée sur la longueur d'onde d'excitation dudit au moins une source réémettrice et la longueur d'onde du second laser étant accordée sur la longueur d'onde de déplétion ou d'activation dudit au moins une source réémettrice ; la réalisation, à l'aide d'un sous module de polarisation, pour chaque laser, d'un état de polarisation contrôlé, la combinaison des deux lasers à l'aide d'un banc laser en une sortie de fibre commune (76b); la projection sur l'échantillon, au moyen d'un appareil optique de projection achromatique (32) effectuée par une diffraction conique ou un assemblage de cristaux uniaxes, pour chaque laser d'une distribution lumineuse
compacte, se propageant suivant le même chemin optique pour l'ensemble des lasers ;
la détection de la lumière réémise par ledit au moins une source réémettrice de l'échantillon ;
la génération, d'au moins une image, à partir de la lumière détectée ;
et la détection directe ou l'analyse algorithmique des images pour obtenir une information de distribution spatiale ou localisation dudit au moins une source réémettrice comportant le contrôle des lasers pour créer conjointement une séquence de distributions d'excitation de topologies différentes et une séquence de distributions de déplétion ou d'activation de topologies différentes, les deux séquences étant synchronisées et adaptées l'une à l'autre

2. Un procédé optique de mesure, selon la revendication précédente, au moins une distribution singulière **d'excitation** étant simultanée à une distribution singulière de déplétion

3. Un procédé selon les revendications précédentes, comportant le contrôle des lasers pour créer conjointement une séquence de distributions d'excitation et une séquence de distributions de déplétion ou d'activation, une des distributions d'excitation étant une superoscillation.

4. Un procédé selon l'une quelconque des revendications 1 à 3, comportant le contrôle des lasers pour créer simultanément ou suivant une séquence de distributions d'excitation et une séquence de distributions de déplétion OU d'activation, l'ensemble des distributions de déplétion ou d'activation étant équivalente ou similaire à un vortex.

5. Un dispositif de mesure pour déterminer la distribution spatiale ou la localisation de sources réémettrices sur un échantillon, l'échantillon comportant au moins une source réémettrice. ladite au moins une source réémettrice réémettant de la lumière en fonction de la lumière projetée sur l'échantillon par un premier laser, suivant une loi déterminée, et la source réémettrice pouvant être déplétée ou activée par l'action d'un second laser le dispositif comportant :

   deux lasers de longueurs d'ondes différentes (79a), (79b), la longueur d'onde du premier laser étant accordée sur la longueur d'onde d'excitation de ladite au moins une source réémettrice et la longueur d'onde du second laser étant accordée sur la longueur d'onde de déplétion ou d'activation de ladite au moins une source réémettrice, un sous module de polarisation, pour réaliser pour chaque laser, d'un état de polarisation différent, la combinaison des deux lasers à l'aide d'un banc laser en une sortie de fibre commune (76b), un module de projection achromatique (32) comportant au moins un cristal conique pour effectuer la projection de distributions lumineuses de familles topologies différentes par une diffraction conique ou un assemblage de cristaux uniaxes, permettant de créer pour chaque laser une distribution lumineuse compacte, se propageant suivant le même chemin optique pour l'ensemble des lasers, un module de détection apte à détecter de la lumière réémise par ledit au moins une source réémettrice de l'échantillon un module de génération, apte à générer au moins une image optique, à partir de la lumière détectée et un module d'analyse algorithmique ou de détection directe apte à analyser des images pour obtenir une information de localisation dudit au moins une source réémettrice. dans lequel les lasers sont configurés pour créer conjointement une séquence de distributions d'excitation de topologies différentes et une séquence de distributions de déplétion ou d'activation de topologies différentes, les deux séquences étant synchronisées pour créer conjointement une séquence de distributions d'excitation et une séquence de distributions de déplétion ou d'activation, les deux séquences étant synchronisées, et une distribution singulière d'excitation étant simultanée à une distribution singulière de déplétion

6. Un dispositif selon la revendication 5 dans lequel les lasers sont configurés pour créer conjointement une séquence de distributions d'excitation et une séquence de distributions de déplétion ou d'activation, une des distributions d'excitation étant une superoscillation.

7. Un dispositif selon l'une quelconque des revendications 5 à 6, dans lequel les lasers sont configurés pour créer conjointement simultanément ou suivant une séquence de distributions d'excitation et une séquence de distributions de déplétion ou d'activation, l'ensemble des distributions de déplétion ou d'activation étant équivalente ou similaire à un vortex.

**Patentansprüche**

1. Optisches Messverfahren zur Bestimmung der räumlichen Verteilung oder der Lokalisierung von reemittierenden Quellen auf einer Probe, wobei die Probe mindestens eine reemittierende Quelle aufweist, wobei die mindestens eine reemittierende Quelle Licht in Abhängigkeit von dem auf die Probe projizierten Licht reemittiert, gemäß einem bestimmten Gesetz, durch eine erste Lichtquelle, die einen ersten Laser umfasst, und die reemittierende Quelle durch die Wirkung einer zweiten Lichtquelle depletierbar oder aktivierbar ist, die einen zweiten Laser umfasst, wobei das Verfahren aufweist:

   die Verwendung der zwei Laser (79a), (79b), wobei die Wellenlänge von einem der Laser auf die Erregungswellenlänge der mindestens einen reemittierenden Quelle abgestimmt ist und die Wellenlänge des zweiten Laser auf die Depletions- oder Aktivierungswellenlänge der mindestens einen reemittierenden Quelle abgestimmt ist;

die Herstellung, mit Hilfe einer Polarisations-Untermoduls, für jeden Laser, eines gesteuerten Polarisationszustands, die Kombination der zwei Laser mit Hilfe einer Laserbank an einem gemeinsamen Faserausgang (76b);

die Projektion auf die Probe, mittels eines achromatischen optischen Projektionsgeräts (32), durchgeführt durch eine konische Diffraktion oder eine Anordnung einachsiger Kristalle, für jeden Laser, einer kompakten Lichtverteilung, die sich auf demselben optischen Weg für die Gesamtheit der Laser ausbreitet;

die Detektion des von der mindestens einen reemittierenden Quelle der Probe reemittierten Lichts;

die Erzeugung von mindestens einem Bild auf der Basis des detektierten Lichts;

und die direkte Detektion oder die algorithmische Analyse der Bilder, um eine Information über die räumliche Verteilung oder Lokalisierung der mindestens einen reemittierenden Quelle zu erhalten, aufweisend die Steuerung der Laser zwecks gemeinsamer Erzeugung einer Sequenz der Erregungsverteilungen unterschiedlicher Topologien und einer Sequenz der Depletions- oder Aktivierungsverteilungen unterschiedlicher Topologien, wobei die zwei Sequenzen synchronisiert und aneinander angepasst sind.

2. Optisches Messverfahren nach vorangehendem Anspruch, wobei mindestens eine singuläre Erregungsverteilung mit einer singulären Depletionsverteilung gleichzeitig ist.

3. Verfahren nach einem der vorangehenden Ansprüche, aufweisend die Steuerung der Laser zur gemeinsamen Erzeugung einer Sequenz der Erregungsverteilungen und einer Sequenz der Depletions- oder Aktivierungsverteilungen, wobei eine der Erregungsverteilungen eine Superoszillation ist.

4. Verfahren nach einem der Ansprüche 1 bis 3, aufweisend die Steuerung der Laser, um gleichzeitig oder nachfolgend eine Sequenz der Erregungsverteilungen und eine Sequenz der Depletions- ODER Aktivierungsverteilungen zu erzeugen, wobei die Gesamtheit der Depletions- oder Aktivierungsverteilungen einem Vortex äquivalent oder ähnlich ist.

5. Messvorrichtung zur Bestimmung der räumlichen Verteilung oder der Lokalisierung von reemittierenden Quellen auf einer Probe, wobei die Probe mindestens eine reemittierende Quelle aufweist, wobei die mindestens eine reemittierende Quelle Licht in Abhängigkeit von dem auf die Probe von einem ersten Laser projizierten Licht reemittiert, gemäß einem bestimmten Gesetz, und die reemittierende Quelle durch die Wirkung eines zweiten Lasers depletierbar oder aktivierbar ist, wobei das Verfahren aufweist:

zwei Laser mit unterschiedlichen Wellenlängen (79a), (79b), wobei die Wellenlänge des ersten Lasers auf die Erregungswellenlänge der mindestens einen reemittierenden Quelle abgestimmt ist und die Wellenlänge des zweiten Laser auf die Depletions- oder Aktivierungswellenlänge der mindestens einen reemittierenden Quelle abgestimmt ist,

ein Polarisations-Untermodul zur Herstellung eines für jeden Laser unterschiedlichen Polarisationszustands, die Kombination der zwei Laser mit Hilfe einer Laserbank an einem gemeinsamen Faserausgang (76b);

ein achromatisches Projektionsmodul (32), das mindestens einen konischen Kristall aufweist, um die Projektion von Lichtverteilungen unterschiedlicher topologischer Familien durch eine konische Diffraktion durchzuführen oder eine Anordnung einachsiger Kristalle, wodurch ermöglicht wird, für jeden Laser eine kompakte Lichtverteilung zu erzeugen, die sich auf demselben optischen Weg für die Gesamtheit der Laser ausbreitet,

ein Detektionsmodul, das imstande ist, von der mindestens einen reemittierenden Quelle der Probe reemittiertes Licht zu detektieren;

ein Erzeugungsmodul, das imstande ist, mindestens ein optisches Bild auf der Basis des detektierten Lichts zu erzeugen, und

ein algorithmisches Analyse- oder Direktdetektionsmodul, das imstande ist, Bilder zu analysieren, um eine Information über die Lokalisierung der mindestens einen reemittierenden Quelle zu erhalten,

wobei die Laser ausgelegt sind, um gemeinsam eine Sequenz der Erregungsverteilungen unterschiedlicher Topologien und eine Sequenz der Depletions- oder Aktivierungsverteilungen unterschiedlicher Topologien zu erzeugen, wobei die zwei Sequenzen synchronisiert sind, um gemeinsam eine Erregungsverteilungssequenz und eine Depletions- oder Aktivierungsverteilungssequenz zu erzeugen, wobei die zwei Sequenzen synchronisiert sind, und wobei eine singuläre Erregungsverteilung mit einer singulären Depletionsverteilung gleichzeitig ist.

6. Vorrichtung nach Anspruch 5, wobei die Laser ausgelegt sind, um gemeinsam eine Sequenz der Erregungsverteilungen und eine Sequenz der Depletions- oder Aktivierungsverteilungen zu erzeugen, wobei eine der Erregungsverteilungen eine Superoszillation ist.

7. Vorrichtung nach einem der Ansprüche 5 bis 6, wobei die Laser ausgelegt sind, um gemeinsam gleichzeitig oder nachfolgend eine Sequenz der Erregungsverteilungen und eine Sequenz der Depletions- oder Aktivierungsverteilungen zu erzeugen, wobei die Gesamtheit der Depletions- oder Aktivierungsverteilungen einem Vortex äquivalent oder ähnlich ist.

**Claims**

1. An optical measurement method for determining the spatial distribution or the location of re-emitting sources on a sample, the sample including at least one re-emitting source, said at least one re-emitting source re-emitting light as a function of the light projected onto the sample, in accordance with a determined law, by a first light source comprising a first laser, and the re-emitting source being able to be depleted or activated by the action of a second light source, comprising a second laser, the method including:

the use of the two lasers (79a), (79b), the wavelength of one of the lasers being tuned to the wavelength of excitation of said at least one re-emitting source and the wavelength of the second laser being tuned to the wavelength of depletion or activation of said at least one re-emitting source;
the achievement for each laser, using a polarization sub-module, of a controlled polarization state, the combination of the two lasers using a white laser in a common fiber output (76b) ;
the projection onto the sample, by means of an achromatic optical projection apparatus (32) performed by a conical diffraction or an assembly of uniaxial crystals, for each laser of a compact light distribution, propagating along the same optical path for the set of the lasers;
the detection of the re-emitted light by said at least one re-emitting source of the sample;
the generation of at least one image from the detected light;
and the direct detection or the algorithmic analysis of the images to obtain information on the spatial distribution or location of said at least one re-emitting source including the control of the lasers to conjointly create a sequence of excitation distributions of different topologies and a sequence of depletion or activation distributions of different topologies, the two sequences being synchronized and adapted to each other.

2. The optical measurement method according to the preceding claim, at least one particular excitation distribution being simultaneous to a particular depletion distribution.

3. The optical measurement method according to the preceding claims, including the control of the lasers to conjointly create a sequence of excitation distributions and a sequence of depletion or activation distributions, one of the excitation distributions being a super-oscillation.

4. The optical measurement method according to any one of claims 1 to 3, including the control of the lasers to create simultaneously or subsequently a sequence of excitation distributions and a sequence of depletion OR activation distributions, the set of the depletion or activation distributions being equivalent or similar to a vortex.

5. A measurement device for determining the spatial distribution or the location of re-emitting sources on a sample, the sample including at least one re-emitting source, said at least one re-emitting source re-emitting light as a function of the light projected onto the sample by a first laser, in accordance with a determined law, and the re-emitting source being able to be depleted or activated by the action of a second laser, the device including:

two lasers of different wavelengths (79a), (79b), the wavelength of the first laser being tuned to the wavelength of excitation of said at least one re-emitting source and the wavelength of the second laser being tuned to the wavelength of depletion or activation of said at least one re-emitting source,
a polarization sub-module to achieve for each laser, of a different polarization state, the combination of the two lasers using a white laser in a common fiber output (76b),
an achromatic projection module (32) including at least one conical crystal to perform the projection of light distributions from different topological families by a conical diffraction or an assembly of uniaxial crystals, allowing creating for each laser a compact light distribution, propagating along the same optical path for the set of the lasers,
a detection module able to detect the re-emitted light by said at least one re-emitting source of the sample,
a generation module able to generate at least one optical image, from the detected light, and

an algorithmic analysis or direct detection module able to analyze images to obtain information on the location of said at least one re-emitting source,
wherein the lasers are configured to conjointly create a sequence of excitation distributions of different topologies and a sequence of depletion or activation distributions of different topologies, the two sequences being synchronized to conjointly create a sequence of excitation distributions and a sequence of depletion or activation distributions , the two sequences being synchronized, and a particular excitation distribution being simultaneous to a particular depletion distribution.

6. The device according to claim 5,
wherein the lasers are configured to conjointly create a sequence of excitation distributions and a sequence of depletion or activation distributions, one of the excitation distributions being a super-oscillation.

7. The device according to any one of claims 5 to 6,
wherein the lasers are configured to conjointly create simultaneously or subsequently a sequence of excitation distributions and a sequence of depletion or activation distributions, the set of the depletion or activation distributions being equivalent or similar to a vortex.

**FIG. 1**

23

28

26

202

25

212

211

21

200

210

201

20

22

24

FIG. 2

FIG. 3

FIG. 4a

50

58

56

55

60

53

42

57

54

59

FIG. 4b

60

61

62

"I"

"a$_K$"

FIG. 4c

22

51

60

63

64

1:
2:
3:
...
K:

**FIG. 4d**

22

51

2000

60    2001

63

64

1:
2:
3:
...
K:

**FIG. 4e**

FIG. 5

**Figure 6a**

**Figure 6b**

**Figure 7a**

Figure 7b

FIG. 7c

FIG. 7d

FIG. 8

110 — Images

111 — Prétraitement

112 — Images intermédiaires

900 —

113 — Descripteurs

114 — Set de descripteur: $A_i$, $\sigma_i$

117 —

115 — Filtre

118 —

Database de connaissances — Résul-tat

116 —

FIG. 9

**Figure 10**

FIG. 11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2012049381 A2
- US 5731588 A
- WO 2013008033 A1
- GB 2012051680 W
- WO 2012069076 A1

- EP 2010067956 W
- US 6555826 B
- US 6958470 B
- WO 2010069987 A1

### Littérature non-brevet citée dans la description

- **C. F. PHELAN.** *Conical diffraction and Bessel beam formation with a high optical quality biaxial crystal*
- **L. SCHERMELLEH ; R. HEINTZMANN ; H. LEON-HARDT.** A guide to super-resolution fluorescence microscopy. *The Journal of cell biology,* 2010, vol. 190, 165-175
- **M. V. BERRY.** Conical diffraction asymptotics: fine structure of Poggendorff rings and axial spike. *Journal Of Optics A-Pure And Applied Optics,* 2004, vol. 6, 289-300
- **J. F. NYE ; M. V. BERRY.** Dislocations in Wave Trains. *Proceedings of the Royal Society of London. Series A, Mathematical and Physical Sciences,* 1974, vol. 336, 165-190
- **S. W. HELL ; J. WICHMANN.** Breaking the diffraction resolution limit by stimulated émission: stimulated-emission-depletion fluorescence microscopy. *Optics letters,* 1994, vol. 19, 780-782
- **W. R. HAMILTON.** Third Supplement to an Essay on the Theory of Systems of Rays. *Trans. Royal Irish. Acad.,* 1-144
- **H. LLYOLD.** On the Phenomena presented by Light in its Passage along the Axes of Biaxial Crystals. *The London and Edinburgh Philosophical Magazine and Journal of Science,* vol. ii, 112-120
- **C. PHELAN ; D. O'DWYER ; Y. RAKOVICH ; J. DONEGAN ; J. LUNNEY.** Conical diffraction and Bessel beam formation with a high optical quality biaxial crystal. *J. Opt. A, Pure Appl. Opt,* 2009, vol. 7, 685-690
- **M. BERRY ; M. JEFFREY.** Conical diffraction: Hamilton's diabolical point at the heart of crystal optics. *Progress in Optics,* 2007, vol. 50, 13
- **A. GEIVANDOV ; I. KASIANOVA ; E. KHARATIYAN ; A. LAZAREV ; P. LAZAREV ; S. PALTO.** *Printable Thin Biréfringent Film Retarders for LCD*

- **B. ACHARYA ; A. PRIMAK ; T. DINGEMANS ; E. SAMULSKI ; S. KUMAR.** The elusive thermotropic biaxial nematic phase in rigid bent-core molecules. *Pramana,* 2003, vol. 61, 231-237
- **D. H. GOLDSTEIN ; E. COLLETT.** Polarized light. CRC, 2003, vol. 83
- **J. B. PAWLEY.** Handbook of biological confocal microscopy. Springer Verlag, 2006
- **M. BASS.** Handbook of optics. McGraw-Hill, 2001
- **M. MINSKY.** *Microscopy Apparatus,* 1961, 3, , 013, , 467
- **P. LI ; J. ZHAO ; S. LIU ; X. GAN ; T. PENG ; X. JIAO.** Dynamic behaviors of optical vortices in dual-core photonic crystal fibers. *Optics Communications,* 2012
- **VICIDOMINI G ; SCHÖNLE A ; TA H ; HAN KY ; MONERON G et al.** STED Nanoscopy with Time-Gated Détection: Theoretical and Experimental Aspects. *PLoS ONE,* 2013, vol. 8 (1
- **KATRIN I. WILLIG ; LARS KASTRUP ; U. VALENTIN NÄGERL ; STEFAN W. HELL.** *STED Microscopy: Différent Approaches and Applications*
- **EMILIANO RONZITTI et al.** Frequency dépendent détection in a STED microscope using modulated excitation light. *Optics Express,* 2013, vol. 21 (1), 210-219
- **D. WILDANGER.** A STED microscope aligned by design. *Opt. Exp.,* 2009, vol. 17, 16100-16110
- **N. BOKOR et al.** Compact fluorescence depletion microscope system using an integrated optical element. *Opt. Comm.,* 2008, vol. 281, 1850
- **R. MENON ; P. ROGGE ; H.-Y. TSAI.** Design of diffractive lenses that generate optical nulls without phase singularities. *J. Opt. Soc. Am. A,* 2009, vol. 26 (2), 297-304
- **M. REUSS.** Biréfringent device converts a standard scanning microscope into a STED microscope that also maps molecular orientation. *Opt. Exp.,* 2010, vol. 18, 1049-1058

- **Y. ZHANG.** Génération of three-dimensional dark spots with a perfect light shell with a radially polarized Laguerre-Gaussian beam. *Applied optics,* 2010, vol. 49, 6217-6223
- **J. BESAG.** Towards Bayesian Image Analysis. *Journal of Applied Statistics,* 1989, vol. 16, 395-407
- **C. LOUCHET ; L. MOISAN.** Total Variation denoising using posterior expectation. *Proceedings of the European Signal Processing Conférence (Eusipco),* 2008
- **C. LOUCHET ; L. MOISAN.** Posterior Expectation of the Total Variation model: Properties and Experiments. *SIAM Journal on Imaging Sciences,* 2013, vol. 6 (4), 2640-2684
- **L. TIEMEY.** Markov Chains for exploring posterior distributions. *The Annals of Statistics,* 1994, vol. 22 (4), 1701-1728
- **W.K. HASTINGS.** Monte Carlo Sampling Methods Using Markov Chains and Their Applications. *Biometrika,* 1970, vol. 57 (1), 97-109